# EUROPEAN PATENT SPECIFICATION

(11) **EP 2 181 348 B1**
(45) Date of publication and mention of the grant of the patent: **18.01.2012**
(21) Application number: 07736799.3
(22) Date of filing: 20.04.2007
(51) Int. Cl.: G02B 6/12, G02B 6/34

(54) **METHOD AND DEVICE.FOR TUNABLE OPTICAL FILTERING USING VERNIER EFFECT**
VERFAHREN UND EINRICHTUNG ZUR ABSTIMMBAREN OPTISCHEN FILTERUNG UNTER VERWENDUNG DES VERNIER-EFFEKTS
PROCÉDÉ ET DISPOSITIF POUR UN FILTRAGE OPTIQUE ACCORDABLE UTILISANT UN EFFET DE VERNIER

(43) Date of publication of application: 05.05.2010
(73) Proprietor: MOSAID Technologies Incorporated, Ottawa, ON K2K 2X1 (CA)
(72) Inventor: SOCCI, Luciano, I-20126 Milano (IT); GHIDINI, Silvia, I-20126 Milano (IT); GALLI, Paola, I-20126 Milano (IT); BOLLA, Lorenzo, I-20126 Milano (IT); BOFFI, Federico, I-24046 Osio Sotto (BG) (IT)
(74) Representative: Tirloni, Bartolomeo
(86) International application number: PCT/IT2007/000295
(87) International publication number: WO 2008/129571

(56) References cited:
- EP-A- 1 176 438
- WO-A-03/107056
- JP-A- 5 323 390
- US-A1- 2005 035 278

## Description

### Field of the invention

The present invention relates to the field of optical communication systems including optical filtering functionality, such as hitless tunable optical add and/or drop functionality.

### Background of the invention

A common technique to increase the transmission capacity of today optical communication systems is wavelength division multiplexing (WDM), wherein a plurality of optical channels, each having a respective optical frequency (and correspondingly respective optical wavelength), are multiplexed together in a single optical medium, such as for example an optical fiber. The optical frequencies allocated for the WDM channels are typically arranged in a grid having an equal spacing between two adjacent frequencies. In dense WDM (DWDM), wherein the WDM channels may be closely spaced, the frequency spacing is typically equal to about 100 GHz (corresponding to a wavelength spacing of about 0.8 nm in the near infrared band - roughly between 1 µm to 2µm) or about 50 GHz (about 0.4 nm in wavelength). Other used WDM channel separations are 200 GHz, 33.3 GHz and 25 GHz. Typically, the set of allocated optical frequencies occupies an optical bandwidth of about 4 THz, which gives room for the use of up to about 40 WDM channels having 100 GHz spacing. The device of the present invention is suitable for a WDM optical bandwidth of at least about 1 THz, preferably at least about 2 THz, typically placed around 1550 nm.

Optical networking is expected to be widely used in perspective optical communication field. The term 'optical network' is commonly referred to an optical system including a plurality of point-to-point or point-to-multipoint (e.g., metro-ring) optical systems optically interconnected through nodes. In all-optical transparent networks few or no conversions of the optical signal into electrical signal, and then again in optical signal, occur along the whole path from a departure location to a destination location. This is accomplished by placing at the nodes of the optical networks electrooptical or optical devices which are apt to process the optical signal in the optical domain, with limited or no need for electrical conversion. Examples of such devices are optical add and/or drop multiplexers (OADM), branching units, optical routers, optical switches, optical regenerators (reshapers and/or re-timers) and the like. Accordingly, the term 'optical filtering' or 'optical processing', for the purpose of the present description is used to indicate any optical transformation given to an optical radiation, such as extracting a channel or a power portion of said channel from a set of WDM channels ('dropping'), inserting a channel or a power portion of said channel into a WDM signal ('adding'), routing or switching a channel or its power portion on a dynamically selectable optical route, optical signal reshaping, retiming or a combination thereof. In addition, optical systems, and at a greater extent optical networks, make use of optical amplifiers in order to compensate the power losses due to fiber attenuation or to insertion losses of the optical devices along the path, avoiding the use of any conversion of the optical signal into the electrical domain even for long traveling distances and/or many optical devices along the path. In case of DWDM wavelengths, all channels are typically optically amplified together, e.g. within a bandwidth of about 32 nm around 1550 nm.

In optical systems, and at a greater extent in optical networks, a problem exists of filtering one or more optical channels at the nodes while minimizing the loss and/or the distortion of the filtered optical channel(s), as well the loss and/or the distortion of the optical channels transmitted through the node ideally without being processed (hereinafter referred to as 'thru' channels). Advantageously, the optical processing node should be able to simultaneously process more than one channel, each one arbitrarily selectable independently from the other processed channels. Ideally up to all the channels may be simultaneously selectable to be processed, but in practice a number between 2 and 16, preferably between 4 and 8, is considered to be sufficient for the purpose.

It is desirable that the optical processing node is tunable or reconfigurable, i.e., it can change dynamically the subset of channels on which it operates. In order to be suitable to arbitrarily select the channel to be processed within the whole WDM optical bandwidth, the tuning range of the whole optical processing node should be at least equal to said optical bandwidth.

It is also preferred that while the processing node "moves" from an initial channel (A) to a destination channel (B), the channels different from A and B remain unaffected by the tuning operation. In this case the component is said to be 'hitless'. In particular, the channels placed between the initially processed channel and the final channel after tuning should not be subject to an additional impairment penalty, called 'hit', by the tuning operation. The hit may include a loss penalty and/or an optical distortion such as phase distortion and/or added chromatic dispersion.

For example, optical communication networks need provisions for partially altering the traffic at each node by adding and/or dropping one or several independent channels out of the total number. Typically, an OADM node removes from a WDM signal a subset of the transmitted channels (each corresponding to one frequency/wavelength), and adds the same subset with a new information content, said subset being dynamically selectable.

There are several additional concerns. The tunable optical processing node should not act as a narrow band filter for the unprocessed channels, since concatenation of such nodes would excessively narrow the channel pass bands. The tunable optical processing node should also be ultra-compact and should have low transmission loss and low cost, since these important factors ultimately determine which technology is selected.

In patent US 7,065,276 B2, it is presented an optical filter structure comprising an input waveguide, an output waveguide, and a filter stage formed by at least one closed loop resonator optically coupled to the input and output waveguides. A level of the coupling from each of the waveguides to the resonator is at least 5 times greater than a loss-per-revolution of the resonator. The filter structure thus provides for reducing a bandwidth and insertion loss while filtering at least one optical channel from a multi-channel light signal. Patent applications US 2005/0035248 A1, JP 0532 3390 A, EP11 76 438 A1 and WO 03/107056 A1 also describe similar optical filter structures comprising at least two mutually coupled closed loop resonators situated in between the input and output waveguides.

In article "Expansion of tuning range of wavelength selective switch using Vernier effect of series coupled microring resonator", OFC2005, IEEE ThB2, pages 718-9 by Y. Goebuchi et al., the tunable range of non-blocking tunable Add/Drop filter using thermo-optic effect of double series coupled dielectric microring resonator is expanded to 14.4 nm using the Vernier effect.

### Summary of the invention

The Applicant has observed that there is a need for an optical communication system having tunable optical processing (dropping) functionality which leaves unaltered, or at least reduces the alteration of, the thru channels during tuning, i.e. it should be hitless. In addition, the optical processing node should preferably be low-loss, low-cost, fast tunable and/or broadband.

The Applicant has noted that the filter devices described in US 7,065,276 B2 are not optimally designed and/or operated for changing (tuning) the filtered (dropped) optical channel from an initial channel to a final one, both the channels being arbitrarily selectable over a closely spaced WDM grid occupying an optical band, while keeping at zero or low level the power and/or phase and/or dispersion hit on the thru channels during the tuning (placed in between the initial and final channel and/or outside the spectral region spanning from the initial to the final channel).

Moreover, the Applicant has faced the problem of reducing the power consumption of the optical filter while being tuned and/or operated for filtering.

The Applicant has found a method and a system for optical transmission provided with tunable optical processing functionality which can solve one or more of the problems stated above. The solution of the present invention is simple, feasible and low cost.

In an aspect of the present invention, an optical device for filtering an optical signal as set forth in appended claim 1 is provided.

The applicant has found that the cascade of a first optical filter comprising at least two resonators, wherein the free spectral range of the second resonator is less than or equal to two thirds of the free spectral range of the first one and is greater than or equal to 0.55 times the free

spectral range of the first one, and a second optical filter comprising a resonator with a free spectral range which differs, in absolute value, from the free spectral range of the first one by more than a quarter of the WDM frequency spacing, allows to enhance the extinction of the dropped channel while at the same time keeping limited the hit on the thru channel both during processing and during the tuning. Advantageous embodiments of this device are provided as set forth in appended claims 2 to 25.

According to another aspect of the present invention, an optical communication system comprises a transmitter, a receiver, an optical line optically connecting the transmitter and the receiver and an optical device according to the above and coupled along the optical line, as set forth in appended claim 20.

### Brief description of the drawings

The features and advantages of the present invention will be made clear by the following detailed description of an embodiment thereof, provided merely by way of non-limitative example, description that will be conducted making reference to the annexed drawings, wherein:
Figure 1 schematically shows in terms of functional blocks an exemplary optical communication system architecture;
Figure 2 is a schematic diagram showing in terms of functional blocks an embodiment of the device for tunable optical filtering;
Figure 3 is a schematic diagram showing in terms of functional blocks a further embodiment of the device for tunable optical filtering;
Figure 4 shows a further preferred embodiment of the device for tunable optical filtering according to the present invention;
Figures 5 and 6 respectively show the calculated power and dispersion response of a single stage of the filtering device of Figure 4;
Figure 7 shows a relation between the dispersion and the coupling coefficient value for the single stage of the filtering device of figure 4;
Figures 8 and 9 respectively show the calculated power and dispersion response of the whole filtering device of Figure 4. Figure 8a and 8b show enlarged views of the graph of figure 8 and figure 9a shows an enlarged view of the graph of figure 9;
Figures 10a and 10b respectively show the calculated dispersion and power response of a comparative example of design of the whole filtering device of Figure 4;
Figures 11 a and 11b respectively show the calculated dispersion and power response of an alternative embodiment of a design of the whole filtering device of Figure 4 in accordance to the present invention;
Figure 12 shows a still further preferred embodiment of the device for tunable optical filtering according to the present invention;
Figure 13 shows the calculated drop power response of the optical device of figure 12. Figure 13a shows an enlarged view of the graph of figure 13 together with a comparative example;
Figure 14 illustratively shows an exemplary method for tuning an optical filter;
Figure 15 shows the effects in terms of optical power responses of the method of Fig. 14;
Figure 16 shows a relation between the distance between two resonances of two resonators of an optical filter and the corresponding power loss;
Figures 17A, 17B and 17C show several embodiments of the method for tuning an optical filter;
Figures 18A, 18B, 18C and 18D illustratively show one of the method for tuning an optical filter of figure 17A;
Figure 19 shows a comparative example of a method for tuning an optical filter; and
Figures 20a and 20b respectively show the calculated thru and drop power response of the whole filtering device of Figure 12 when in disabled state.

### Detailed description of the preferred embodiment(s) of the invention

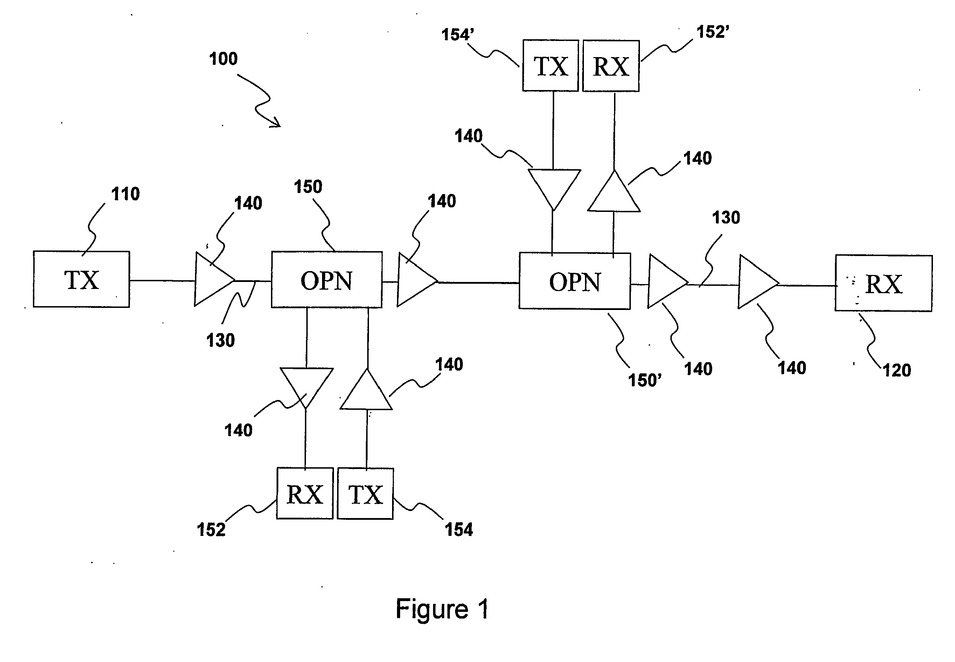

Figure 1 shows an optical communication system architecture.

The optical communication system 100 comprises at least a transmitter 110, a receiver 120 and an optical line 130 which optically connects the transmitter and the receiver. The transmitter 110 is an opto-electronic device apt to emit an optical signal carrying information. It typically comprises at least an optical source (e.g., a laser) apt to emit an optical radiation and at least a modulator apt to encode information onto the optical radiation. Preferably, the transmitter 110 is a WDM transmitter (e.g., a DWDM transmitter) and the optical signal may comprise a plurality of optical channels (each carrying modulation-encoded information) having respective optical frequencies equally spaced by a given frequency spacing and occupying an optical bandwidth. Preferably, said optical signal lies in the near-infrared wavelength range, e.g. from 900 nm to 1700 nm. Preferably said optical bandwidth is at least 1 THz, more preferably it is at least 2 THz, still more preferably it is at least 3 THz, such as for example equal to about 4 THz (e.g. from about 1530 to about 1560 nm, also known as 'C-band'). The receiver 120 is a corresponding opto-electronic device apt to receive the optical signal emitted by the transmitter and to decode the carried information. The optical line 130 may be formed by a plurality of sections of optical transmission media, such as for example optical fiber sections, preferably cabled. Between two adjacent sections of optical fiber, an optical or opto-electronic device is typically placed, such as for example a fiber splice or a connector, a jumper, a planar lightguide circuit, a variable optical attenuator or the like.

For adding flexibility to the system 100 and improving system functionality, one or a plurality of optical, electronic or opto-electronic devices may be placed along the line 130. In figure 1 a plurality of optical amplifiers 140 are exemplarily shown, which may be line-amplifiers, optical boosters or pre-amplifiers.

The optical system 100 comprises at least one optical processing node (OPN) 150 optically coupled to the optical line 130 and apt to filter or route or add or drop or regenerate, fully or partially, at least one optical channel of the WDM optical signal propagating through the optical line 130. The OPN is preferably dynamically tunable or reconfigurable. In the particular case wherein the optical processing node 150 is an optical add and/or drop node 150, as shown in Fig. 1, i.e., a node adapted to route or switch or add and/or drop the optical signal, the routed or switched or dropped or added channel(s) may be received or transmitted by further receiver(s) 152 or transmitter(s) 154, respectively, which may be co-located with the OPN node or at a distance thereof. The optical system or network 100 may advantageously comprise a plurality of optical processing nodes. In Figure 1 a further optical processing node 150' is exemplarily shown, together with its respective optional transmitting and receiving devices 152' and 154'.

An optical system 100 having optical add and/or drop nodes 150, as shown in Figure 1, is commonly referred to as an 'optical network' and it is characterized by having a plurality of possible optical paths for the optical signals propagating through it. As exemplarily shown in Figure 1, a number of six optical paths are in principle possible, which corresponds to all possible choices of the transmitter-receiver pairs in Figure 1 (excluding the pairs belonging to the same node).

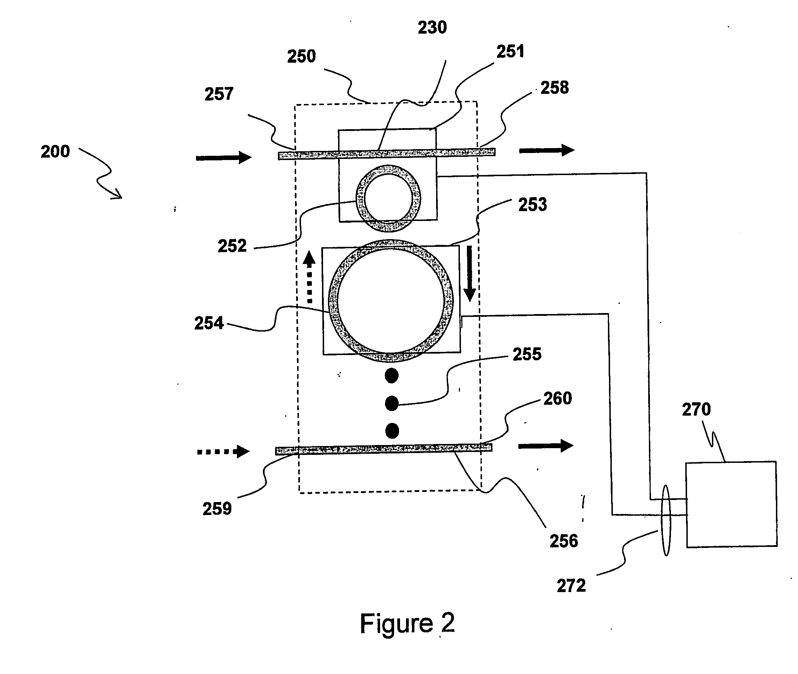

Figure 2 shows a schematic diagram of an optical device 200. The optical device 200 may be comprised within the optical processing node 150 of Fig. 1.

The design scheme of the optical device 200 comprises an optical filter 250 comprising an input port 257 and an output port 258. Throughout the present description, the terms 'input' and 'output' are used with reference to a conventional direction of propagation of the optical radiation (in Fig. 2 exemplarily from left to right and from top to bottom, as indicated by the solid arrows), but, when in operation, the optical radiation may propagate in the opposite direction. The optical filter 250 is adapted to receive an optical signal comprising a plurality of channels lying on a grid of *n* optical frequencies equally spaced by a given frequency spacing Δf and occupying a total optical bandwidth BW=(*n*-1)Δf via the input port 257 and to output a transformed optical signal via the output port 258 according to optical transfer functions (such as phase and power transfer functions). The optical filter 250 may be any optical device apt to give an optical transformation to the input optical signal, being its optical transfer functions wavelength-dependent in the wavelength band of interest. In the present description, any physical quantity which substantially changes within the WDM optical wavelength band of interest (e.g. 32 nm around 1550 nm) is referred to as being 'wavelength-dependent'.

Comprised within the optical filter 250, a first optical path 230, in the form of, e.g. an optical waveguide such as a planar lightguide circuit (PLC) waveguide, optically connects the input port to the output port.

The optical filter 250 comprises a plurality of resonant cavities (or resonators) 252, 254, 255, such as Bragg gratings or microcavities such as linear cavities, microrings, racetracks, photonic band gap cavities and the like. In a preferred configuration, the resonant optical filter 250 comprises microring (as shown in figure 2) or racetrack resonators. The plurality of resonators comprises a first optical resonator 252 optically coupled adjacently to the first optical path 230 and a second resonator 254 optically coupled adjacently to said first resonator 252. In the present description and claims, the expression 'optically coupled adjacently' means that the coupled structures are in proximity close enough to allow a direct transfer of optical power from one structure to the other without any intervening additional optical element, such as a ring resonator or an input/output bus waveguide. In general, but not necessarily, the two adjacently coupled structures are not in physical contact, but a gap exists small enough to allow the optical coupling. The more general expression 'optically coupled' means both 'adjacently optically coupled' and also optically coupled via one or more intervening optical elements, for example two bus waveguides coupled across one or more rings (e.g., optical paths 257 an 259 in Fig. 2).

Optionally, one or more further resonators 255 are coupled in series to said second resonator 254. In the drawings, the symbol 255 consisting in three dots vertically aligned represents an arbitrary number, including zero, of resonators. Preferably the series-coupled resonators 252, 254, 255 comprised within the optical filter 250 are less than or equal to four, more preferably they are three, still more preferably they are two. Advantageously, the further resonators 255 are structurally identical to the second resonator 254 and they are operated (e.g. tuned) in unison to the second resonator 254.

In general, a single resonant optical cavity has associated 'resonant wavelengths' (and corresponding 'resonant frequencies'), defined as those wavelengths which fit an integer number of times on the cavity length of the resonant optical cavity. The integer number defines the 'order' of the resonance. The distance between two adjacent resonant frequencies/wavelengths is referred to as the free spectral range (FSR) of the single resonator. In accordance to the present invention, the FSR of the first resonator 252 is different from the FSR of the second resonator.

The transfer functions (e.g. phase, dispersion or power) of the overall resonant optical filter 250 are generally wavelength dependent at and in the proximity of a resonant wavelength of one or more of its individual resonators, depending on the distribution of the resonances of the constituting individual resonators and on their reciprocal position in the frequency domain.

In a preferred embodiment the optical filter 250 is an optical add and/or drop filter (OADF) wherein the two or more resonators 252, 254, 255 are optically coupled in series between the first optical path 230 and a further 'drop' waveguide 256. A further output optical port 260 ('drop port'), optically coupled to the drop waveguide has the function of dropping, fully or partially, at least an optical channel within the input optical signal. In other words, the power transfer function at the drop port 260 is typically characterized by high transmission peaks equally spaced in frequency by a quantity equal to the overall FSR of the optical filter. In an embodiment, the OADF 250 has a further input optical port 259 ('add port') which is apt to receive an optical radiation (dashed arrow) to be added to the thru optical signal at the output port 258. It is noted that in absence of the further drop waveguide, the optical filter 250 may act as an all-pass filter. In Fig. 2 the positions of the drop and add port are those determined by an even number of resonators. In case of an odd number of resonators, the positions of the two ports may be switched.

When an optical drop filter 250 having an even number of resonators is in operation, the optical channels input into the input port 257 and having optical frequencies which match the (aligned) resonances of the resonators 252, 254, 255 are output into the drop output port 260 coupled to the second optical path 256, and they physically travel across the resonators 252, 254, 255, as indicated by the solid down- arrow near the microrings.

The optical filter 250 is a tunable optical filter, i.e. it is apt to select an arbitrary optical channel to be filtered. This functionality may be accomplished with any technique known in the art, such as for example exploiting the thermo-optic, the electro-optic, the magneto-optic, the acousto-optic and the elasto-optic effect or by stress or MEMS actuating. In particular, at least one resonator comprised within the optical filter 250 is individually tunable differentially with respect to at least another resonator of the remaining resonators of the optical filter 250, i.e. it may be tuned with a certain degree of freedom from the tuning of the at least another resonator. In the present description, the expression 'tuning an individual resonator' means moving the resonances of the resonator in the frequency spectrum, e.g. actuating the resonator by exploiting a physical effect. Typically, the ensemble of resonances of an individual resonator moves substantially rigidly (i.e. maintaining unchanged the resonance distribution and spacing) while the resonator is being tuned.

The optical device 200 further comprises a control system 270, 272, 251, 253 operatively connected to the resonators of the optical filter 250 so as to be able to selectively tune them.

For example, the control system may comprise a control device 270 operatively coupled, by way for example of connecting lines 272, to at least two actuators 251, 253, which in turn are operatively coupled to the plurality of resonators of the optical filter 250. The control device 270 typically includes a processor (e.g. a microprocessor) configured for implementing the methods of tunable filtering. The control system may also include drivers (not shown) suitable to drive the actuators 251 and 253.

In one exemplary embodiment, as the one shown in Fig. 2, each individual resonator may be tuned, within a tuning range, substantially independently from the remaining resonators, by way for example of a respective actuator dedicated to each individual resonator and individually driven by the control device 270. The dedicated actuator is configured for strongly interacting with the respective associated individual resonator while interacting weakly, or not at all, with the remaining resonators. For example, as shown in Fig. 2, in case the tuning operation relies on the thermo-optic technique (particularly advantageous in case of silicon waveguides) a respective micro-heater 251, 253 may be thermally coupled to (e.g. placed above the microrings, e.g. over the SiO₂ upper cladding) each individual resonator 252, 254 respectively, so that it is suitable to heat ideally only the respective associated resonator (and possibly the straight bus waveguide 230 or 256 which the associated resonator may be adjacently coupled to) while being ideally thermically isolated from the others, or with negligible thermal crosstalk.

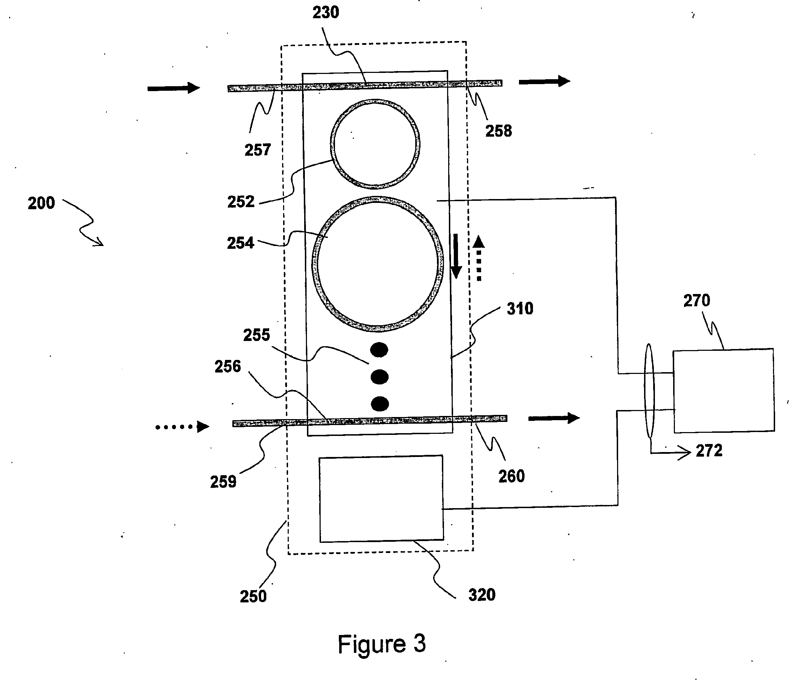

Fig. 3 shows an alternative configuration of the optical filter 250. For the sake of clarity, it is assumed that the actuators are thermo-optic actuators (i.e. micro-heaters), but the present configuration equally applies to other tuning techniques. A massive tuning heater 310 is configured for heating substantially uniformly all the resonators 252, 254 and 255 comprised within the optical filter 250. In addition, a trimming heater 320 is configured for selectively heating one or a plurality of resonators, but in any case it is configured for interacting not uniformly with the totality of the resonators in the optical filter 250. For example, the heater 320 may be placed in proximity (on the side or on top) of a single resonator 254 so as to interact with this one single resonator more strongly than with the remaining resonators. In this way a differential temperature is generated which allows differential tuning of the resonators.

For the sake of clarity, the following description will refer to optical filters comprising two and no more than two microring resonators. However, it will be understood that each individual optical filter described below may comprise any kind of resonator and/or any number of additional resonators 255 as explained with reference to figure 2 or 3.

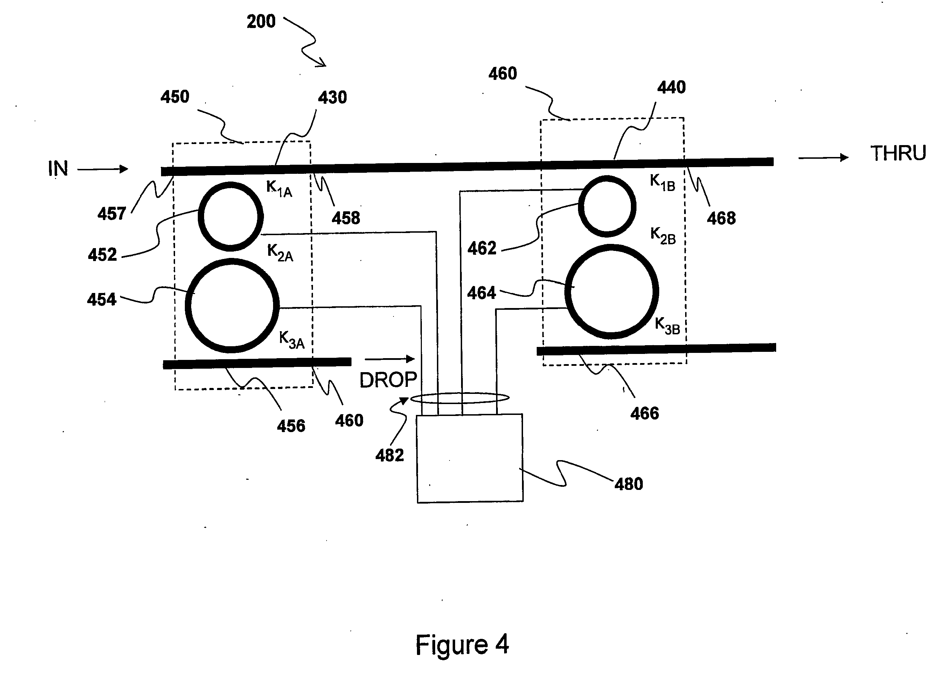

Figure 4 schematically shows a preferred embodiment in accordance to the present invention.

It comprises a first 450 and a second filter 460 optically coupled in cascade, each one based on the scheme shown in figure 2 or 3 and comprising two series-coupled microring resonators. Each of the filter 450, 460 may have an associated control system of the kind shown in figure 2 or 3 and operatively connected to the resonators of the respective optical filter 450, 460 so as to be able to selectively tune them in accordance to the present invention. Preferably, a control device 480, as shown in figure 4, is operatively coupled, by way for example.of respective connecting lines 482, to all the actuators (not shown) operatively coupled to the resonators of the optical filters 450, 460. The control device 480 is configured for implementing the methods of tunable filtering in accordance with an aspect of the present invention.

The optical waveguides 430, 456 of the first optical filter functionally correspond to the optical waveguides 230 and 256 respectively of the optical filter 250 shown in figure 2 and 3. The same is true for the optical waveguides 440, 466 of the second optical filter. Preferably, the waveguides 430 and 440 are one and the same optical waveguide.

In an alternative configuration (not shown), the second optical filter 460 may comprise only one resonator 462.

In accordance to the present invention, the resonator 452 of the first filter 450 adjacently coupled to the bus waveguide 430 has an FSR (hereinafter FSR_{1A}) which is smaller than the given optical bandwidth BW and greater than the half of the optical bandwidth by more than the WDM channel spacing Δf, i.e. BW/2 + Δf ≤ FSR_{1A} ≤ BW. Advantageously, the above choice allows that at most two consecutive resonances of the first resonator fall within the optical bandwidth of interest BW.

In addition the FSR (hereinafter FSR_{2A}) of the resonator 454 adjacently coupled to the first resonator of the first filter 450 is selected according to the following expression:
FSR_{1A} -2Δ ≥ FSR_{2A} ≥ FSR_{1A}/2+Δ, wherein Δ is a suitable quantity greater than zero.
Preferably, the quantity Δ is selected as a function of the value of FSR_{1A} according to the following expression: 1/6*FSR_{1A} ≥ Δ ≥ 0.05*FSR_{1A}. In other words, the relation between FSR_{1A} and FSR_{2A} may be written as: 2/3*FSR_{1A} ≥ FSR_{2A} ≥ 0.55*FSR_{1A}.

Exemplarily, for a channel spacing Δf greater than or equal to 50 GHz and less than or equal to 200 GHz, a suitable value of the quantity Δ is comprised between 50 GHz and 800 GHz.

The advantage of the above choice will be explained further below.

Advantageously, the resonator 462 of the second filter 460 adjacently coupled to the bus waveguide 430 has an FSR (hereinafter FSR_{1B}) which differs, in absolute value, from the FSR of the first resonator of the first filter 450 by more than a quarter of the channel spacing Δf. Preferably the difference, in absolute value, between FSR_{1A} and FSR_{1B} is less than five times the channel spacing Δf, more preferably less than two times the channel spacing. Preferably, the difference, in absolute value, between FSR_{1A} and FSR_{1B} is less than three quarters of the channel spacing Δf. In other words, the FSR_{1B} is selected according to the following expression: 3/4 Δf ≥ |FSR_{1B} - FSR_{1A}| ≥ Δf/4.

Preferably, the FSR (hereinafter FSR_{2B}) of the resonator 464 adjacently coupled to the first resonator of the second filter 460 is selected with the same rule described above for the first optical filter, i.e. according to the following expression 2/3*FSR_{1B} ≥ FSR_{2B} ≥ 0.55*FSR_{1B}. Optionally, FSR_{2B} may be chosen equal to FSR_{2A}.

Preferably, the (power) coupling coefficient (hereinafter K_{1A}) between the first resonator 452 of the first filter 450 and the bus waveguide 430 is greater than or equal to 15%. More preferably K_{1A} is greater than or equal to 17%. Still more preferably, K_{1A} is greater than or equal to 18%.

Preferably, the (power) coupling coefficient (hereinafter K_{1B}) between the first resonator 462 of the second filter 460 and the bus waveguide 440 is greater than or equal to 15%. More preferably K_{1B} is greater than or equal to 17%. Still more preferably, K_{1B} is greater than or equal to 18%.

Optionally, further optical filters (not shown) may be cascaded in series to the first and second optical filter, each of the further optical filters being designed with respect the respective previous one in a way similar to how the second optical fitter 460 is designed with respect to the first one 450.

In the following, an exemplary realization of the device 200 of Figure 4 is described, the device being designed in accordance to the present invention for a channel spacing Δf equal to 100 GHz and an optical bandwidth BW equal to about 4000 GHz (for a total of allocated WDM frequencies of about 40). The choice of filter parameters has been done in order to meet the following specifications: thru loss uniformity < 0.5dB; thru dispersion < 20ps/nm; dropped channel rejection > 30dB; drop isolation on adjacent channels > 30dB, and drop isolation of non adjacent channels > 40dB. Although the specification on the maximum extra dispersion of the thru channels is +/- 20ps/nm, nevertheless during the transient time of the tuning procedure (i.e. over some tenths of milliseconds) an extra dispersion up to 100-150 ps/nm can be tolerated without significantly affecting the transmission performances.

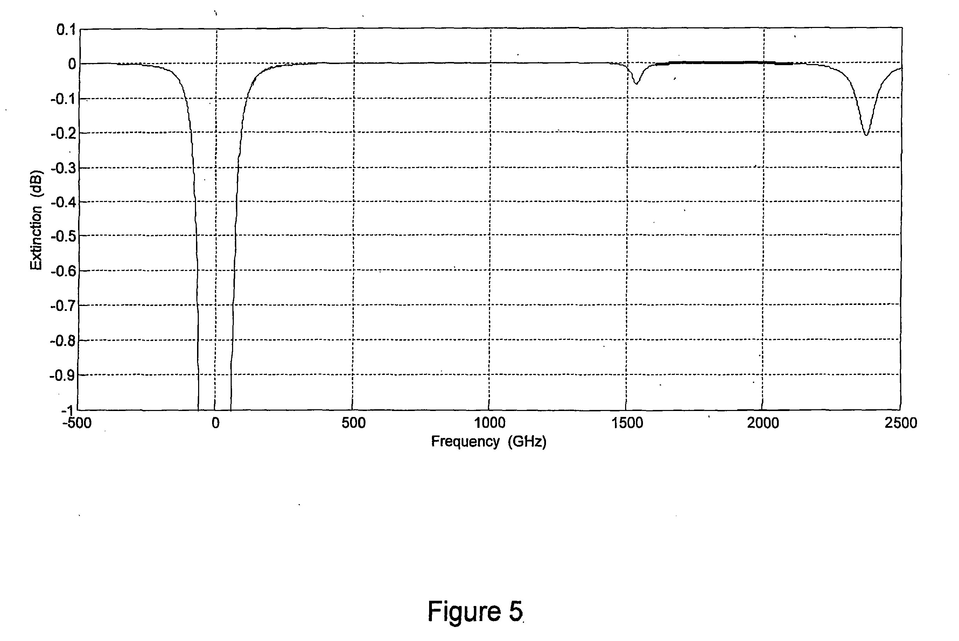

Figure 5 exemplarily shows the thru power response of the optical filter 450 alone, i.e. at its output port 458, with the following choice of the functional parameters: FSR_{1A}=2375GHz, FSR_{2A}=1550GHz (FSR_{2A}≅0.65*FSR_{1A}), K_{1A}=18%, K_{2A}=0.98% (K_{2A} is the coupling coefficient between the first resonator 452 of the first filter 450 and the second resonator 454), K_{3A}=15.3% (K_{3A} is the coupling coefficient between the second resonator 454 and the drop waveguide 456). It is assumed that a respective resonance of each of the first 452 and second 454 microring are aligned at a frequency that is conventionally set at zero, so as to be able to drop a channel centered on this frequency. Accordingly, the notches centered at about 1550 GHz and 2375 GHz are due to a respective higher-order resonance of respectively the second 454 and the first 452 microring. No other notches occur within the band from about -1500 GHz to about 3000 GHz.

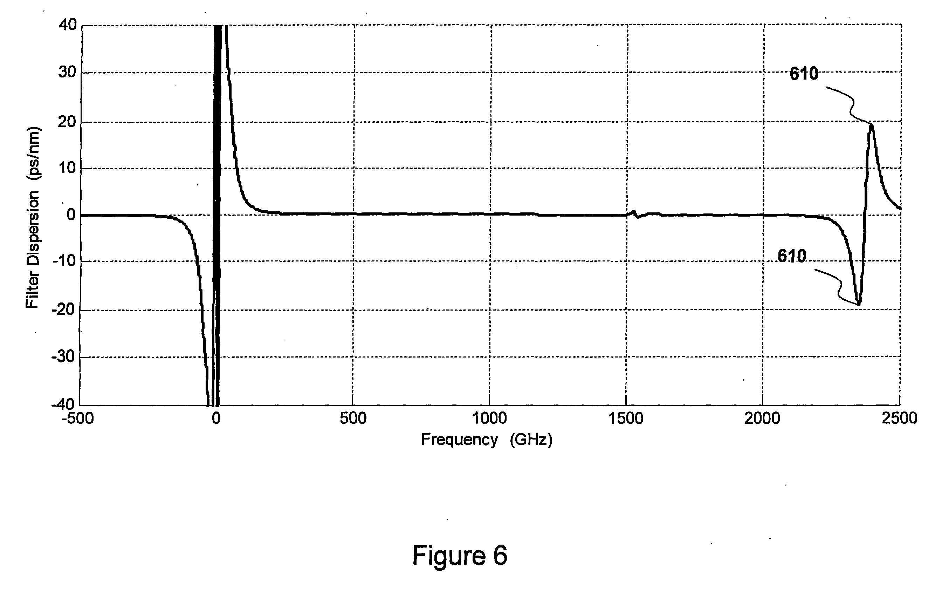

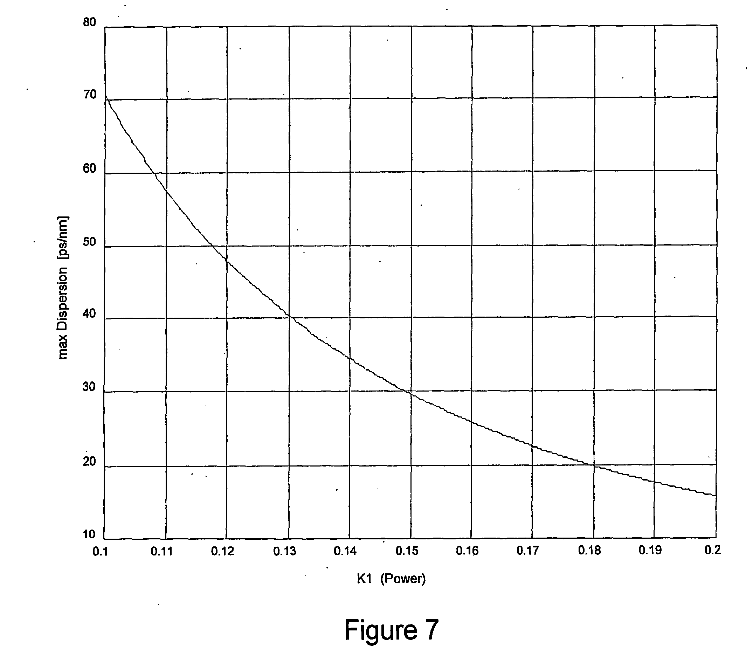

Figure 6 shows the corresponding thru dispersion response, wherein the distortion due to the higher-order resonance of the second and first microring are visible at 1550 GHz and 2375 GHz respectively. From figure 6 it can be seen that the maximum value of the dispersion hit due to the first ring 452 (peaks 610) is maintained below 20 ps/nm, which can be an acceptable dispersion limit. This is achieved by properly selecting the power coupling coefficient K_{1A} between the first resonator 452 of the first filter 450 and the bus waveguide 430 as described above. Figure 7 shows the value of the maximum dispersion hit due to the first ring 452 as a function of the coupling coefficient K_{1A}. such maximum dispersion being less than about 30 ps/nm for coupling coefficient values greater than about 15%.

An advantage of having the coupling coefficient K_{1A} selected above 15% is that there is no need to have a precise control on the value of FSR_{1A}, being the maximum dispersion hit below a specific value throughout the whole optical bandwidth. Further advantages are:
- a decrease of nonlinear effects: the choice of a greater K_{1A} produces a low-Q cavity, wherein accumulation of power is kept limited, thus preventing two-photon absorption phenomena (and consequent losses increase), refractive index variation and the like; and
- a decrease of losses in the thru spectrum: the larger the value of K_{1A}, the lower the loss at the higher-order resonance of the first ring 452 (at 2375 GHz in the example of figure 5). For a given value of the notch depth (0.5dB) the greater the coupling coefficient the greater is the maximum propagation loss acceptable in the ring.

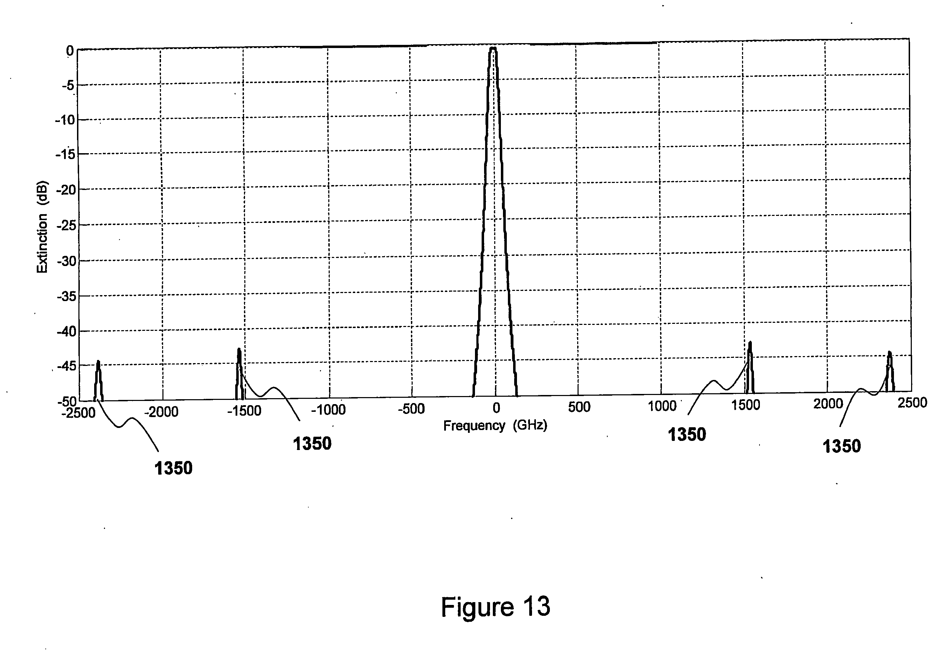

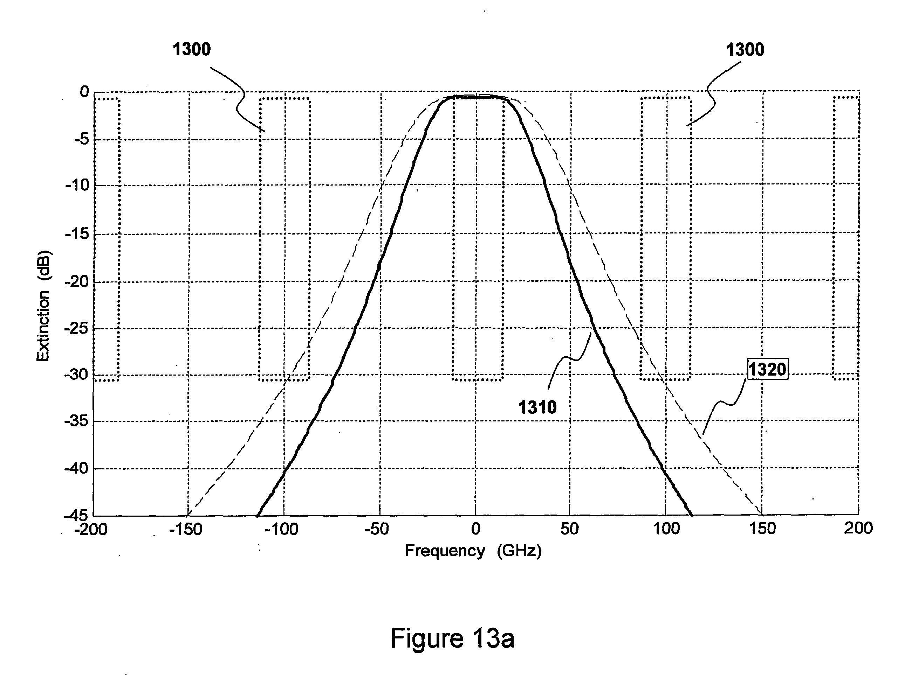

Preferably, the K_{1A} value has an upper value of about 25 % selected in order to avoid that the bandwidth of the drop response at zero frequency in figure 5 is so large that it generates a non-negligible loss on the thru channels adjacent to the dropped one (see also figure 13a below).

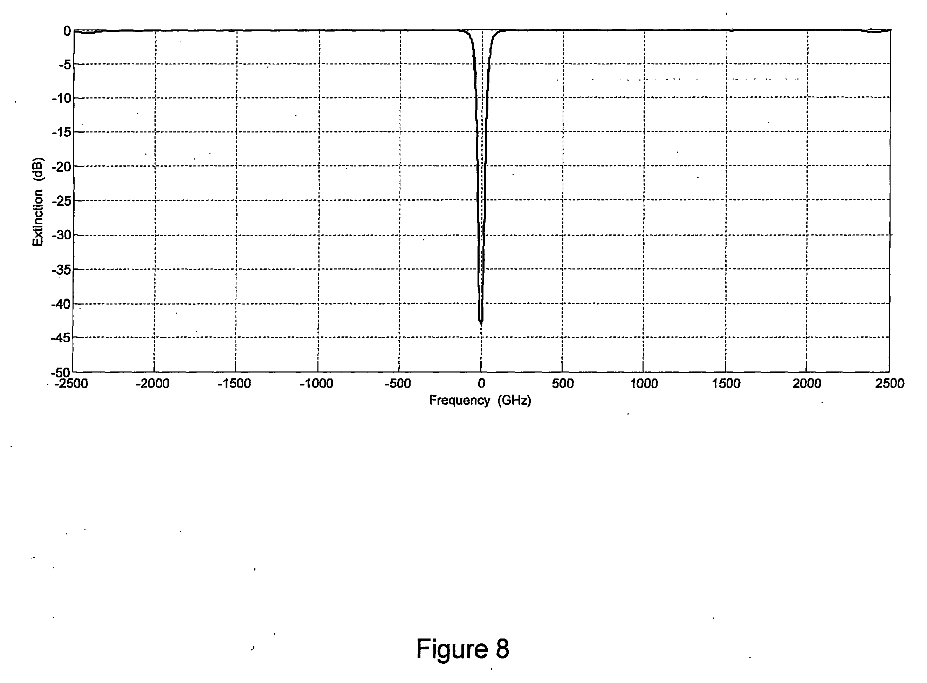

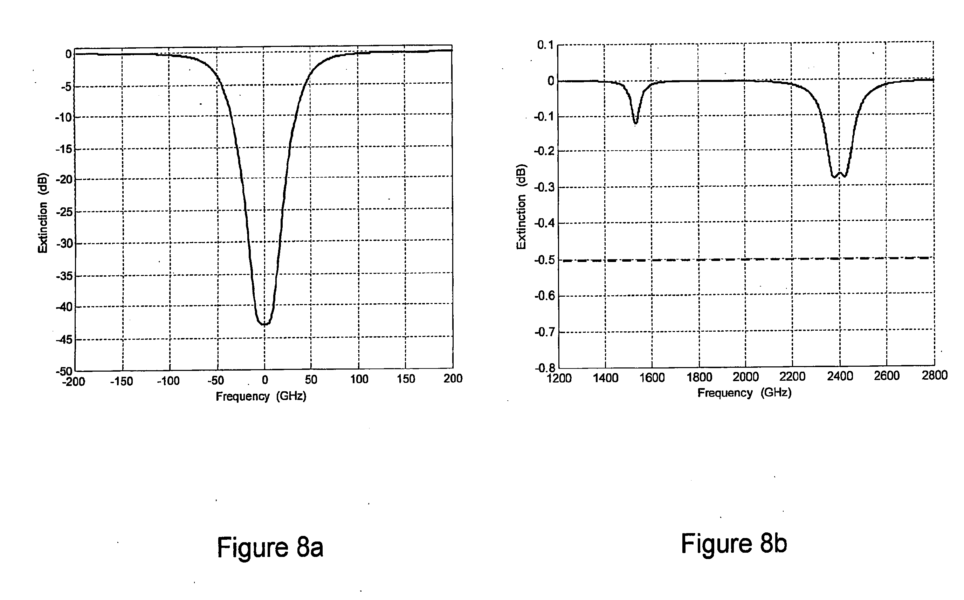

Figure 8 shows the thru power response of the cascade of the optical filter 450 and the optical filter 460, i.e. at the output port 468 of the second optical filter. In addition to the selection done for figure 5, the following functional parameters have been exemplarily selected: FSR_{1B}=2425GHz, FSR_{2B}=1550GHz, κ_{1B}=18%, K_{2B}=0.98%, K_{3B}=15.3%, Preferably, the coupling coefficients of the second optical filter are equal to the corresponding coupling coefficients of the first one. Figures 8a and 8b show an enlarged view of a respective portion of the frequency spectrum of figure 8. In figure 8b it is visible the double-peak shape of the structure of the notch around 2400 GHz, which includes the contribution due to the first ring 452 of the first optical filter at 2375 GHz and the one due to the first ring 462 of the second optical filter at 2425 GHz. The maximum loss on a channel falling in correspondence to this notch is less than 0.3 dB, well inside the tolerance requested in order to obtain the exemplary thru loss uniformity (<0.5dB).

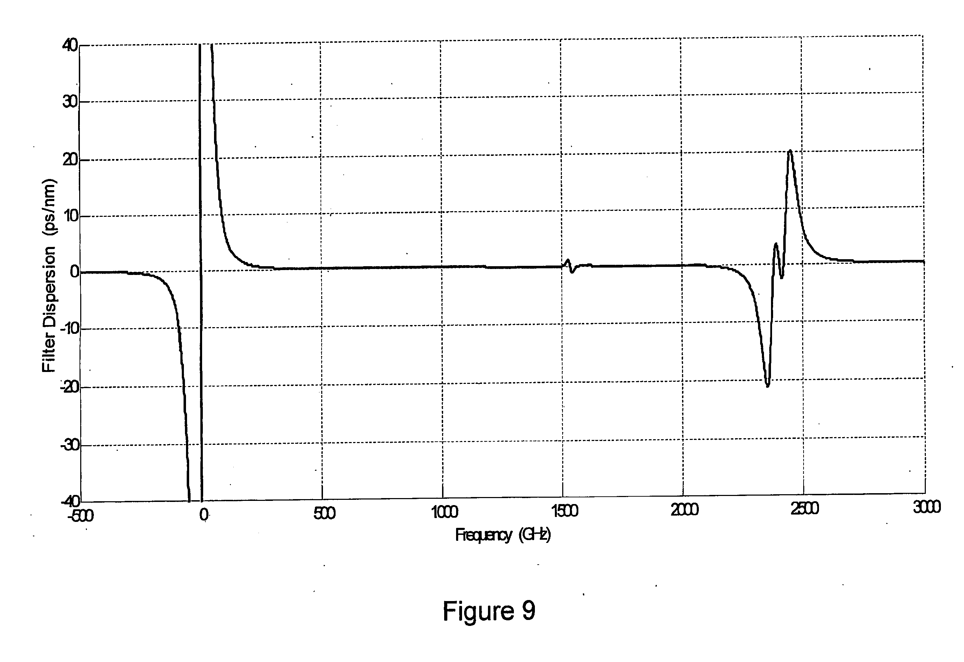

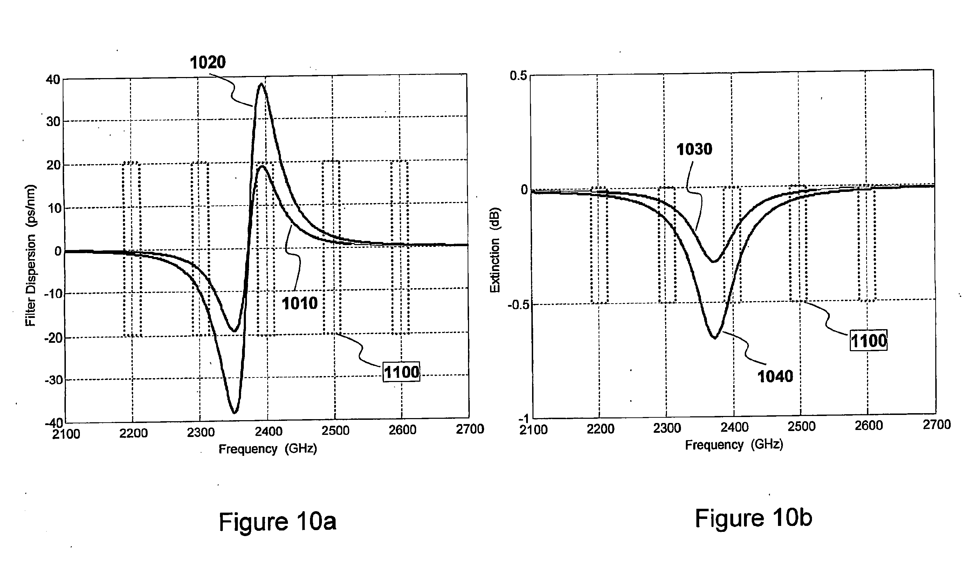

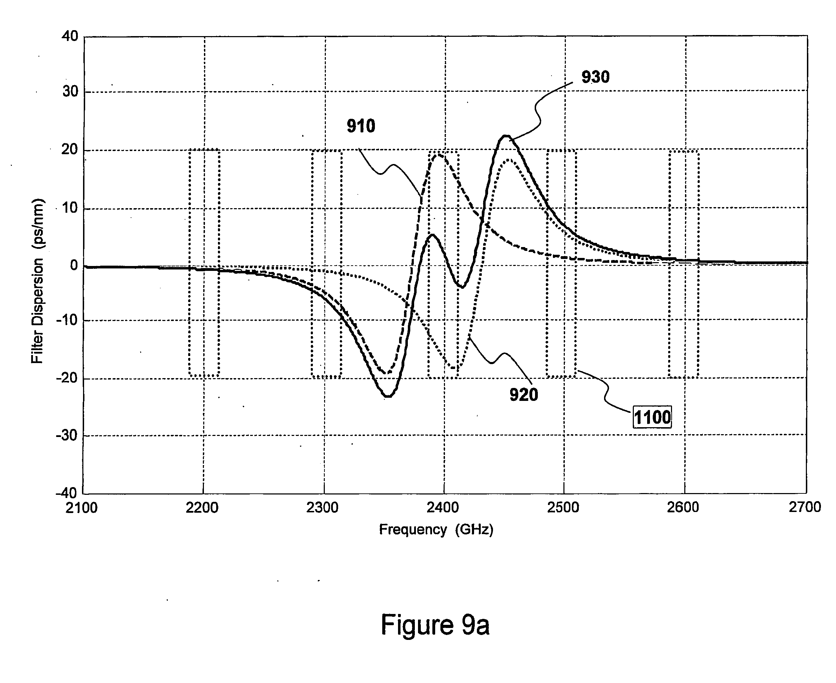

Figure 9 shows the corresponding thru dispersion response at the output port 468. The relation between FSR_{1B} and FSR_{1A}, i.e. FSR_{1B} ≥ FSR_{1A} +Δf/4 (Δf=100 GHz), allows to avoid that the contribution to the dispersion hit given by the first ring 452 of the first filter 450 (see figure 6) sums up with the contribution given by the first ring 462 of the second filter 460. This phenomenon is depicted in a comparative example in which FSR_{1B} is equal to FSR_{1A}, as shown in Figures 10a and 10b. Curves 1010 and 1020 represent the dispersion distortion respectively due to the first optical filter 450 and to the cascade of the first and second optical filter 450, 460. Curves 1030 and 1040 represent the corresponding power hits. The dashed rectangles 1100 indicate the position of the WDM allocated frequencies, together with the channel bandwidth (the rectangle width) within which a target specification (the rectangle height) is preferably fulfilled. Figures 10a and 10b show that a channel possibly present at the frequency of 2400 GHz would suffer a dispersion hit greater than 20 ps/nm (up to about 40 ps/nm) and a power loss greater than 0.5 dB.

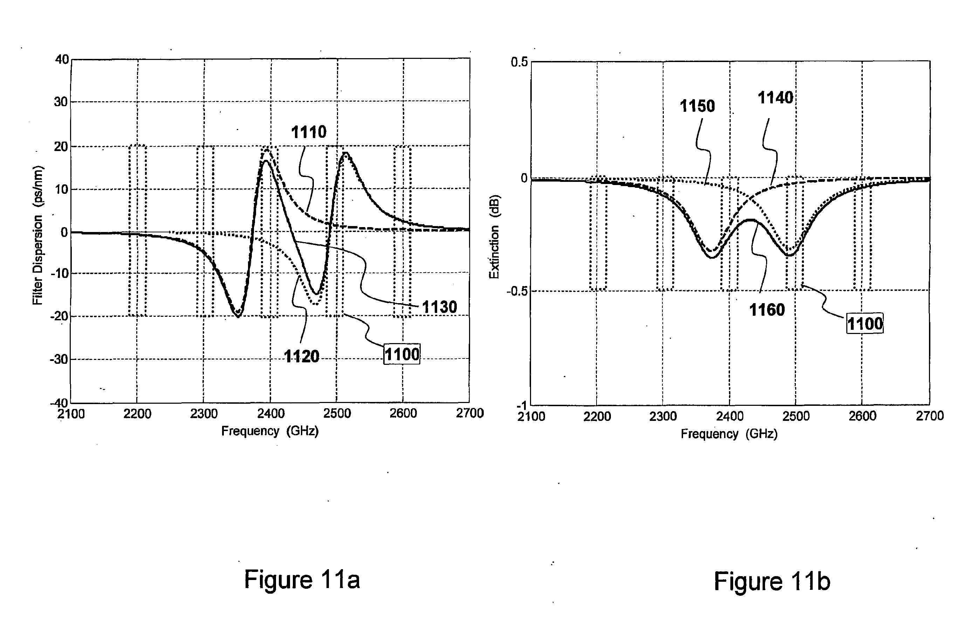

Figures 11 a and 11 b show an embodiment alternative to the one depicted in figures 8 and 9, wherein the FSR_{1A} is as in the previous example and the FSR_{1B} is about 2550 GHZ, i.e. FSR_{1B} = FSR_{1A} +7/4Δf, thus avoiding the summing up of the contributions of the two filters 450 and 460. Curves 1110 (dashed), 1120 (dotted) and 1130 (continuous) represent the dispersion distortion respectively due to the first optical filter 450 alone, to the second optical filter 460 alone and to the cascade of the first and second optical filter 450, 460. Similarly, curves 1140, 1150 and 1160 represent the corresponding power hits.

Going back to Figure 9, it is now clear that the particular choice of the relation between FSR_{1B} and FSR_{1A} i.e. 3/4 Δt ≥ |FSR_{1B} - FSR_{1A}| ≥ Δf/4 (in the example depicted FSR_{1B}=FSR_{1A} +Δf/2) allows the two dispersion contributions to at least partially compensate each other. In particular, the right side of the dispersion distortion given by the ring 452 is substantially cancelled by the left side of the dispersion distortion given by the ring 462, so as to maintain the maximum dispersion hit below 20 ps/nm.

In addition, a suitable choice of the value of FSR_{1A} results in the peak of the overall 'thru' dispersion hit shown in figure 9 falling in between two adjacent WDM frequencies, thus further reducing the dispersion hit on the WDM channels. Figure 9a shows an enlarged view of a portion of the frequency spectrum of figure 9. Curves 910 (dashed), 920 (dotted) and 930 (continuous) represent the dispersion distortion respectively due to the first optical filter 450 alone, to the second optical filter 460 alone and to the cascade of the first and second optical filter 450, 460.

In operation, the optical device 200 receives in input at its input port 457 a WDM optical signal comprising a plurality of optical channels having respective optical frequencies lying on a grid ('WDM grid') of allocated frequencies equally spaced by a given frequency spacing, said grid occupying an optical bandwidth. It is noted that the WDM optical signal does not necessarily need to comprise all the channels which may in principle be allocated on said grid until the grid is filled out. Actually, one or more of the allocated frequencies of the grid may be vacant. Nevertheless, the method and device of the present invention is suitable for processing a full-grid WDM signal and the examples below will refer to this case, without limiting the scope of the invention.

The control device 480 tunes the first and second resonators of the first optical filter 450 so as to align a respective one resonance in correspondence of a channel of the WDM signal (in figures 6 to 11 conventionally the channel at zero frequency). This channel is then dropped through the resonators 452 and 454 down to the drop waveguide 456 and output at the drop port 460. The remaining 'thru' WDM channels propagate substantially unaltered along the waveguide 430 until they reach the second optical filter 460 in correspondence to the waveguide 440. The control device 480 tunes the first and second resonators of the second optical filter 460 so as to align a respective one resonance in correspondence to the frequency of the same channel of the WDM signal which is being dropped. In this way the rejection of the dropped channel is greatly enhanced (e.g., > 30dB in a band of 25 GHz around the dropped frequency) as compared to the one of the first optical filter (see the comparison between figure 8a - wherein the extinction of the double stage is greater than about 30 dB and figure 5 -wherein the extinction, although not visible, is roughly 15 dB). The power extracted by the second optical filter is conveyed through the resonators 462 and 464 to a waveguide 466 for discharging or for inputting to a monitor photodiode not shown in figure.

It is noted that the second optical filter in accordance to a first aspect of the present invention allows to achieve a desired rejection of the dropped channel without paying an additional penalty in dispersion hit on the thru channels.

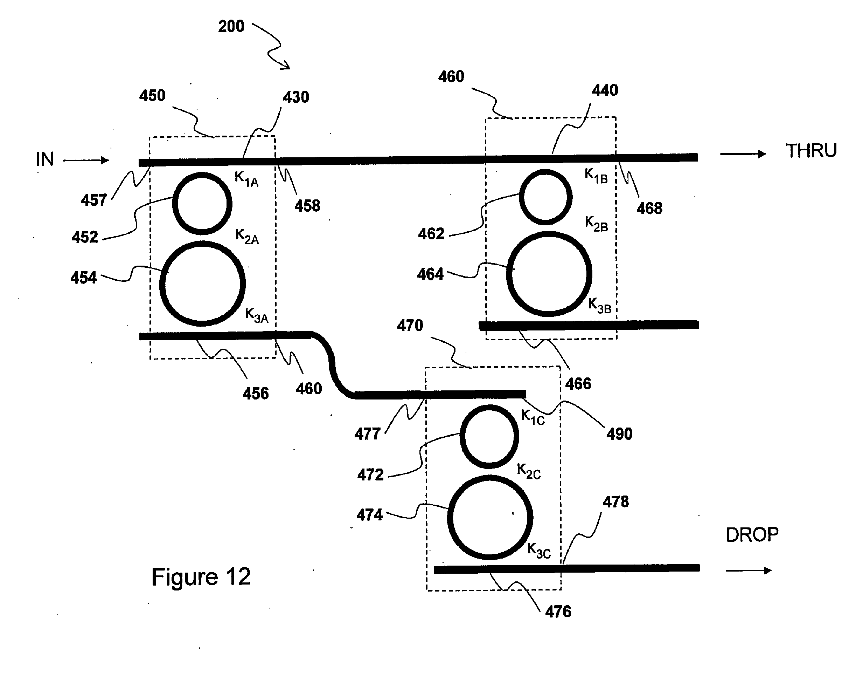

Figure 12 shows an embodiment of the present invention which differs from the one shown in figure 4 in that it further comprises a third optical filter 470 having its input port 457 optically connected to the drop port 460 of the first optical filter 450.

Also the third optical filter 470 is based on the scheme shown in figure 2 or 3 and may have an associated control system of the kind shown in figure 2 or 3 and operatively connected to its resonators so as to be able to selectively tune them in accordance to the present invention. Although not shown in figure 12, preferably the same control device 480 shown in figure 4 is operatively coupled (for example by means of connecting lines 482), also to the actuators (not shown) operatively coupled to the resonators of the third optical filter 470. The control device is configured for implementing the methods of tunable filtering in accordance with a second aspect of the present invention.

The optical waveguides 490, 476 of the third optical filter functionally correspond to the optical waveguides 230 and 256 respectively of the optical filter 250 shown in figure 2 and 3. Preferably, the waveguides 456 and 490 are one and the same optical waveguide.

Even though the optical filter 470 depicted in figure 12 comprises two series-coupled microring resonators 472 and 474, it is envisaged that the third optical filter 470 may alternatively comprise only one resonator 472.

Figure 13 shows the drop power response of the cascade of the optical filter 450 and the optical filter 470, i.e. at the drop port 478 of the third optical filter. In addition to the selection done for figure 5 and 8, the following functional parameters have been exemplarily selected: FSR_{1C}=2375GHz, FSR_{2C}=1550GHz, K_{1C}=8.5%, K_{2C}=0.38%, K_{3C}=10%. Spurious peaks 1350 in the drop spectrum are well behind the required isolation (30 dB).

With a proper selection of its filter parameters, the third filter 470 can advantageously enhance the steepness of the drop response with respect to that obtained by the large (greater than about 15%) coupling coefficient used in the first drop stage. Preferably, the first coupling coefficient K_{1C} of the third optical filter (between the waveguide 490 and the first resonator 472) is smaller than the corresponding coupling coefficient of the first optical filter, so as to provide a drop response steeper than the first optical filter 450. Preferably, the first coupling coefficient K_{1C} of the third optical filter is smaller than or equal to 12%, more preferably 10%. Figure 13a shows an enlarged view of a portion of the frequency spectrum of figure 13, wherein curve 1310 corresponds to the curve shown in figure 13. In figure 13a it is possible to see that the drop isolation on adjacent channels 1300 (in the example at ±100 GHz) is greater than about 30 dB in a band of 25GHz around both adjacent channels 1300 and that the drop isolation of the channels further to the adjacent channels (in the example at ±200 GHz) greater than about 40dB. As a comparative example, curve 1320 corresponds to the drop response in case the coupling coefficient K_{1C} assumes the same value of the one of the first filter 450 (K_{1C}=18%).

In operation, in addition to what described above, the power dropped by the first optical filter 450 at the dropped frequency (conventionally zero) is addressed towards the drop stage (optical filter 470) through the drop waveguide 456 which is optically connected to a waveguide 490 comprised within the third filter 470. The control device 480 tunes the first resonator 472 (and possibly the second resonator 474) of the third optical filter 470 so as to align one resonance of the resonator 472 in correspondence to the frequency of the same WDM channel which is being dropped. In this way the isolation on adjacent channels is greatly enhanced (> 30dB).

The requirements on dispersion distortion are of minor importance for the third optical filter 470 with respect to the requirements on dispersion for the first and second 'thru' optical filters. Also non-linear effects are negligible, because only the power extracted by the first optical filter 450 (and not all the WDM channels) is circulating inside the optical cavities. In one embodiment the FSR of the first ring of the third filter is equal to the one of the first ring of the first filter 450. Exemplarily, the third filter may be identical to the first ring. In another embodiment the FSR of the first ring of the third filter is different from the FSR of both the resonators of the first filter. The FSR of the second ring of the third filter may also be different from the FSR of both the resonators of the first filter. The extinction of the channels further to the channels adjacent to the dropped one is kept below 40 dB, as shown in figure 13.

Preferably, the filters according to the present invention are fabricated in silicon-based technology, in particular in silicon-on-insulator (SOI) technology. Silicon is preferably selected as the core material of the waveguides constituting the optical filters 250, 450, 460 and 470, .i.e. the waveguides constituting both the resonators 252, 254, 452, 454, 462, 464, etc. and the optical paths 230, 256, 430, 440, 456; 466, etc. Preferably, the purity of silicon as the core material is higher than 90% in weight, more preferably higher than 99%. The doping level of the silicon core material is preferably below 10¹⁵ defects/cm³. The choice of silicon is due to its high thermo-optic effect which enables a large tuning range of the optical structures thus fabricated. For example, silicon as a core material allows tuning a microring resonance by at least 16 nm, up to about 32 nm, with a relatively moderate range of the heater temperature, i.e. below 400°C. Silica may be used as a cladding material surrounding the silicon waveguide core, e.g. in a buried or channel or ridge waveguide configuration. Alternatively other kind of materials could be used as cladding such as: polymers, spin on glass i.e. HSQ, Si3N4, etc, as long as their refractive index is smaller than that of the waveguides. According to a preferred embodiment, silicon waveguides are fabricated on a silicon oxide layer (e.g., the SiO₂ layer of a SOI wafer) and they are buried by a layer of tetra-ethyl-ortho-silicate (TEOS).

The high index contrast waveguide obtained through the above material systems allows fabricating microring resonators with very small radius and negligible bending losses. Silicon waveguides height may suitably be in the range of 100-300 nm and their thickness in the range of 200-600 nm.

In the exemplary device 200 described above, silicon waveguide cross section (both for straight bus and microring) is about 400 nm in width and 220 nm in height. In calculating all the device optical responses reported in the present description, a realistic value for the waveguide propagation losses of 3 dB/cm has been assumed, both for the substantially straight silicon bus-waveguides and for the microring waveguides (comparable results are obtained for loss in a range from 2 to 5 dB/cm). In case of different values of microring losses, a proper choice of the bus-to-ring coupling coefficients may allow achieving the desired results in terms of hit losses. The calculated effective and group indexes of the Si waveguide are respectively n_{eff} = 2.24 and n_{group} = 4.37. A SiO₂ top cladding with a refractive index (at a wavelength of 1550 nm and at a temperature of 25°C) of n_{clad} = 1.446 has been included in the design. Silicon refractive index has been taken equal to 3.476 (at a wavelength of 1550 nm and temperature of 25°C).

Based on this waveguide selection, the geometrical dimensioning of the filters 450, 460 and 470 (ring radius and gaps between adjacent optical elements) is summarized in the following table:

| | **Filter 450** | **Filter 460** | **Filter 470** |
|---|---|---|---|
| Radius 1^{st} Ring | 4.58um | 4.49um | 4.58um |
| Radius 2^{nd} Ring | 7.10um | 7.1um | 7.10um |
| gap 1^{st} wg to 1^{st} Ring | 104nm | 104nm | 156nm |
| gap 1^{st} Ring to 2^{nd} Ring | 260nm | 260nm | 320nm |
| gap 2^{nd} Ring to 2^{nd} wg | 144nm | 144nm | 172nm |

A rigorous transfer matrix approach and a 3D Finite Difference Time Domain (FDTD) approach have been respectively used for the calculation of the transfer functions and of the physical dimensional layout of the optical components of the present description. Throughout the present description, the TE polarization mode has been investigated, without restricting the scope of the present invention. In particular, as regard polarization, it is noted that some optical properties of the elements (or of their parts) of the present description, such as, e.g., the resonant optical frequencies, may depend on the specific polarization mode of the optical field propagating therethrough. In the present description, when reference is done to those optical properties, it is assumed a single polarization mode. Preferably the waveguides constituting those elements or their parts are apt to propagate only one polarization (single polarization mode) or they are operated so as to propagate only one polarization (e.g. by exciting only one polarization mode).

The optical components described in the present description, such as the optical waveguides 230, 256, 430, 456 and the microrings 252, 254, 255, 452, 454, etc. of Fig. 2, 3 and 4, may be fabricated by any fabrication process known in the field of integrated optics, e.g. a layering process on a substrate, such as an SOI wafer having a thickness of the buried oxide in the range of 3-10 microns and a thickness of the top Si in the range of 50-1000 nm. The layering process may include the e-beam lithography and etching steps. A SiO₂ layer could be deposited as a top cladding.

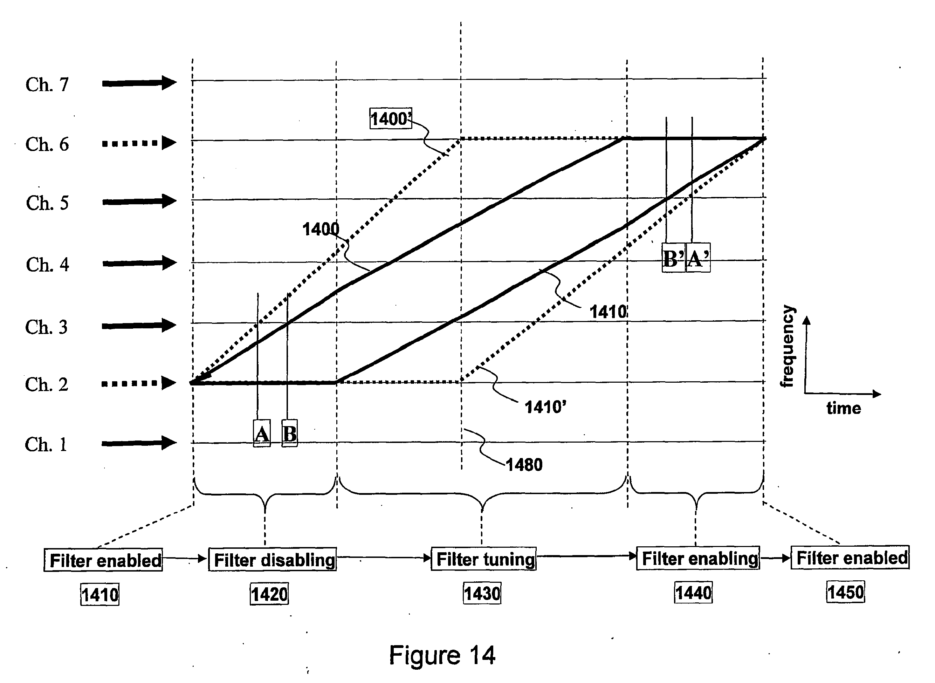

In case thermal tuning is used, suitable heaters (e.g. 251, 253 of figure 2) can be fabricated through metal or doped poly-Si deposition and patterning. In the following, a method for optical filtering will be described. An embodiment will be first described with reference to Figure 14. This method may be implemented by operation of the scheme of the optical device 200 of Figure 2 or 3 or the optical device 200 of figure 4, with regard to the optical filter 450 and/or 460, or again the optical device 200 of figure 12 with regard to any one of the optical filter 450, 460 or 470. For example, this method may be, implemented by tuning the optical filter 450 comprising a plurality of series-coupled. resonators. Where useful for the understanding of the method reference will be made to elements and corresponding reference numerals of Figure 4, without restricting the scope of the method. The method is particularly suitable to change the filtering from an initial channel to a final channel within a plurality of WDM channels, while leaving the thru channels with a minimum alteration or no alteration at all (i.e., hitless tuning).

In Fig. 14 the horizontal and vertical axis of the Cartesian graph represent respectively time and optical frequency scale. Figures from Fig. 14 to Fig. 17 show the case of an optical filter comprising two and no more than two series-coupled resonator. It is to be understood that this teaching equally applies to optical filters comprising three or more series-coupled resonators.

For the sake of illustration it is assumed that the filter 450 is tuned from an initially filtered optical channel (exemplary channel 2 represented by a dashed arrow) to a finally filtered optical channel (exemplary channel 6), passing over the intermediate thru channels (in the example channels 3, 4 and 5 represented by solid arrows). It is also assumed that the final channel has optical frequency ('final frequency') higher than that of the initial channel ('initial frequency'), even though the skilled reader would easily understand the more general case. Typically initially and finally filtered channels, during tuning operation, are switched off or they are let switched on but not used.

First (step not illustrated in Fig. 14), a WDM optical signal is received at the input port 457 of the optical filter 450. The received WDM optical signal comprises a plurality of optical channels having optical frequencies lying on a grid ('WDM grid') of allocated frequencies equally spaced by a given frequency spacing, wherein said grid occupies an optical bandwidth,

In step 1410, the initial channel is dropped by way of the optical filter 450, as already described above. More in details, in the initial state 1410 the filter 450-is 'enabled' which means that a respective optical resonance of each one of the plurality of resonators falls within a given frequency band, typically comprising the center optical frequency allocated for the initial WDM channel (exemplarily the channel 2), said frequency band having a bandwidth sufficiently narrow to enable, independently from the single resonator bandwidth, the filter to operate properly on the desired channel having the desired channel bandwidth (i.e. with suitable shape and dimension of the filter spectral responses as known in the art). Typically, the bandwidth of the frequency band is less than 15 GHz, preferably less than 10 GHz, and more preferably less than 5 GHz, the bandwidth depending, among others, on the selected WDM grid and the selected channel bandwidth. This initial state may be achieved by properly tuning one or more (e.g. all) of the individual resonators. In the present description and claims, when reference is done to a position (in the frequency spectrum) or to a distance of a resonance with respect to another one, reference is done to the peak of the resonance(s) of interest and to the peak-to-peak distance, respectively.

The resonances defined above are hereinafter called 'initial resonances of interest' and their number equates the number of resonators within the filter. It is noted that typically a single resonator has a plurality of resonances characterized by their order and distributed along the frequency spectrum, typically with constant periodicity (neglecting the waveguide dispersion).. The present invention equally holds independently by the specific order of the respective initial resonance of interest of each resonator. In case all the individual resonators are thermo-optically actuated, the enabling above may be achieved, e.g., by setting each resonator at a proper mean temperature ('mean temperature' is the temperature averaged along the whole length of the ring).

Subsequently to step 1410, e.g., when changing of the channel to be dropped is needed, the optical filter 450 is subject to a 'disabling' step (step 1420), wherein the overall dropping response of the filter is hindered by introducing a certain separation between each resonance (at most two) of the first resonator 452 falling within the optical band of interest (WDM optical bandwidth) and the respective resonance of the second resonator which is the resonance nearest (in the wavelength or frequency domain) to said each resonance, the separation being greater than or equal to the suitable quantity Δ (hereafter referred also to as the separation value) introduced above. In Fig. 14 solid curve 1400 represents the trajectory (in the time-frequency plane) of the initial resonance of interest of one resonator while solid curve 1410 represents the trajectory of the initial resonance of interest of the other resonator. In the example of Fig. 14, during disabling only the resonator 1400 is tuned while the resonance of the resonator 1410 is kept fixed, i.e. in correspondence to the initial channel.

Disabling of the filter continues at least until a separation equal to 50 GHz between the two nearest resonances is reached. However, the maximum separation reached by the two resonances during the disabling step or in the entire procedure of Fig. 14 may be, and typically is, higher than 50 GHz. In Fig. 14 the maximum separation corresponding to curves 1400 and 1410 is exemplarily one and half times the WDM channel spacing, while the one corresponding to curves 1400', 1410' is equal to four channel spacings.

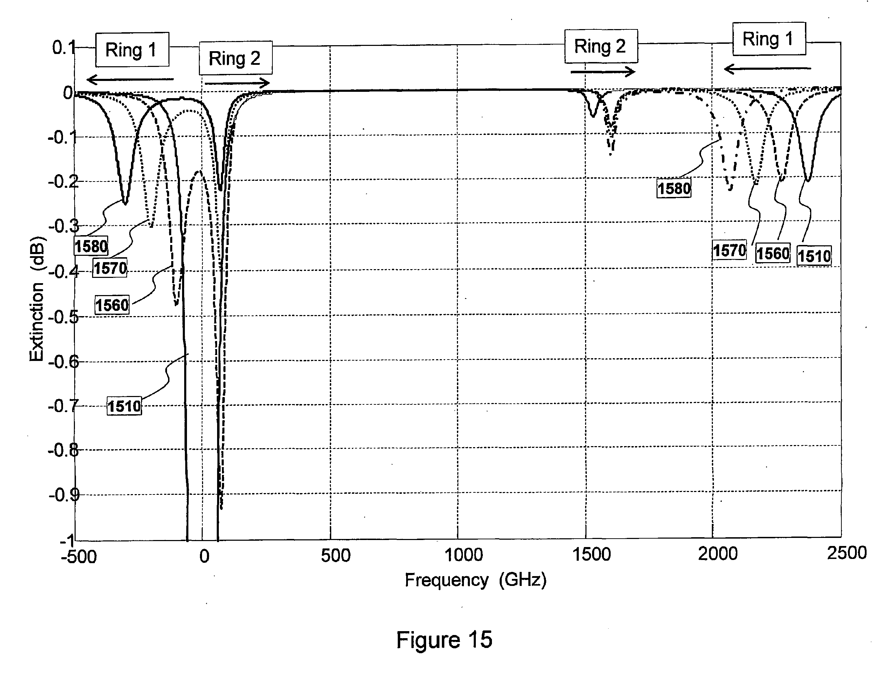

In order to illustrate the effects of step 1420, reference is done to Figs. 15 which shows thru (at port 458) power responses of the optical drop filter 450, taken alone, comprising two and no more than two microring resonators 452, 454 series-coupled between the two bus-waveguides 430, 456. The functional and structural parameters of the optical filter 450 are those exemplarily described above. It's worth noting that the drop response is not particularly significant_ during tuning, since during tuning operations the output from the drop port is not used, because a low level of power from the thru channels crossed in succession by the resonances is momentarily output at the drop port.

Curve 1510 (continuous) in Fig. 15 represents the thru power response (at thru port 458) when the optical filter is in the state according to step 1410 above, i.e. 'enabled' and tuned on a given channel (the initial channel) at conventionally zero frequency (see figure 5). In particular, the two respective initial resonances of interest of the two microring resonators are tuned so as to be substantially aligned, i.e. to fall within a frequency band centered on the initial channel and having bandwidth less than or equal to 10 GHz. Curves 1560 (dashed), 1570 (dotted) and 1580 (dot-dashed) represent the thru response for three different values of separation between the respective optical resonances of the first and second resonator, i.e. respectively 170 GHz, 270 GHz and 370 GHz.

Fig. 15 shows how the overall resonance and filtering function of the optical filter 450 is hampered by mutually separating the initial resonances of interest of the first and second resonator (filter 'disabling').

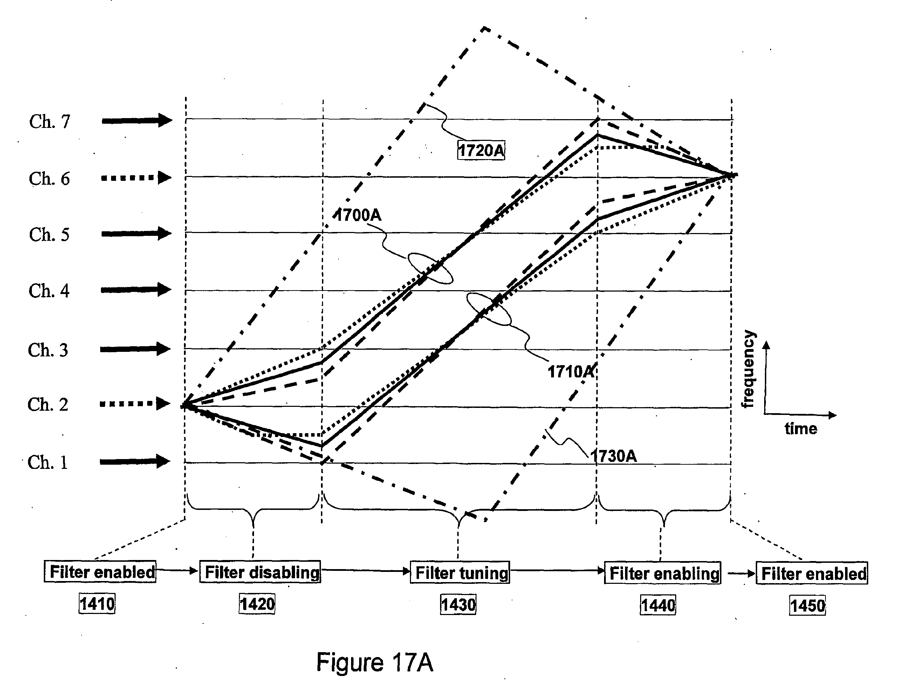

In particular, the disablement shown in Fig. 15 is obtained in a way slightly different from that of the embodiment shown in figure 14 (as better explained with reference to figures 17A-C), i.e. by first tuning the second ring 454 towards the right side of the figure by 70 GHz and the first ring 452 towards the left side by 100 GHz and then tuning only the first ring 452 towards the left and leaving the resonance of the second ring 454 unperturbed.

Back to figure 14, once the filter is disabled, i.e. the separation value is greater than 50 GHz, it is adapted to be massively tuned (optional step 1430) over the WDM band without affecting or weakly affecting the WDM channels 'crossed' by any resonance of any individual resonator of the optical filter. The expression 'massive tuning' means that all the resonances of the resonators are moved in the frequency domain by a respective frequency interval greater than the WDM frequency spacing, while maintaining a distance between the resonances separated according to the above greater than or equal to the separation achieved during the disabling step (which in tum is greater than or equal to 50 GHz).

Preferably, during massive tuning all the resonators of the filter (e.g., resonators 452 and 454 of Fig. 4) are tuned substantially in unison (with the same frequency shift and simultaneously) so as not to vary the distance between the respective resonances of the resonators, i.e. the overall response functions of the optical filter rigidly move in the frequency domain without changing in shape. Exemplarily, regarding curves 1400 and 1410 in Fig. 14, the massive tuning is performed 'rigidly' and it ends when the resonance of one of the individual resonators is in the proximity of the central allocated WDM frequency of the final channel.

The effect of the disablement during massive tuning is illustrated in Fig. 15: the greater the separation between the two nearest resonances of the first and second ring 452, 454, the smaller is the loss potentially hitting the thru channel. A similar behaviour occurs for the dispersion hit. From figure 15, the maximum power loss hit at 170 GHz, 270 GHz and 370 GHz resonance separations is respectively about 1 dB, 0.4 dB and 0.2 dB on the thru channels possibly 'crossed' by the resonance of the ring 454 adjacently coupled to-the first ring 452, while ring 454 is being tuned.

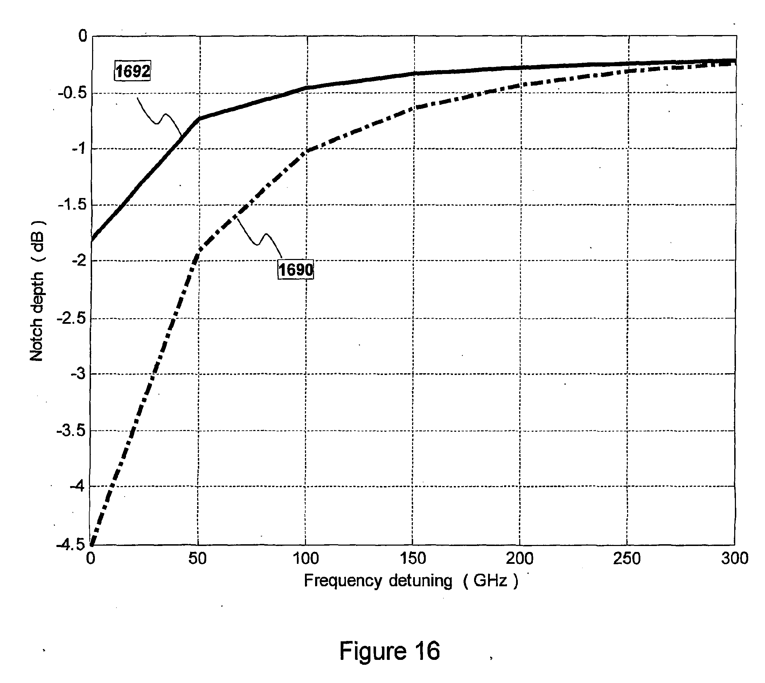

Figure 16 shows on the horizontal axis the mutual distance (in absolute value) between the closest resonances of a two-ring optical filter and on the vertical axis the corresponding power loss at a thru optical frequency ('notch depth') overlapping the resonance of either the ring 452 adjacently coupled to the input-to-thru waveguide (continuous curve 1692) or the ring 454 adjacently coupled to the ring 452 (dot-dashed curve 1690). It is noted that due to the choice of a coupling coefficient _{K1A} ' equal to about 18%, the hit loss coming from the second ring 454 is higher than the one coming from the first ring 452 up to a resonance separation of about 300 GHz.

Accordingly, it is preferable to maintain the relative distance between the nearest respective resonances of the first and the second resonator within the optical filter during massive tuning of the filter at a value greater than or equal to 50 GHz, so as to obtain a maximum loss on the thru channels less than about 3 dB. More preferably, such resonance distance is greater than or equal to 200 GHz, in order to mitigate the hit at a value less than or equal to 0.5 dB. Even more preferably, the resonance distance is greater than or equal to 300 GHz. Further more preferably, when the separation is greater than or equal to 400 GHz (3.2 nm in the near infrared band), the extra loss on thru channels during massive tuning of the filter is less than or equal to about 0.3 dB and the extra dispersion less than or equal to 130 ps/nm, preferably less or equal than 100 ps/nm. The above values of the loss and dispersion hit depend on the filter structure, materials and parameters exemplarily used above.

The Applicant has found that while increasing the mutual distance of the resonances using the thermo-optic effect, a trade-off exists between the consequent decrease of power and dispersion hit and the increase of the thermal cross talk. In fact, the difference in the resonance position corresponds to a difference in the thermal state of the first and second ring, i.e. a difference in the ring mean temperature. For a given resonance separation, a corresponding difference of the ring mean temperatures exists, which depends on the structure and material of the rings. For example, for the two-ring silicon filter 450 with structural and functional parameters and materials as exemplarily described above, a resonance separation of about 800 GHz and 400 GHz corresponds to a difference in the ring mean temperature of respectively about 80 °C and about 40 °C, roughly speaking. For a given difference in the ring mean temperature a corresponding thermal cross-talk may occur, i.e. a certain amount .of thermal energy flows from the hotter ring (i.e., the ring being heated up) to the cooler one and/or from the heater heating the ring to the adjacent ring(s). Again, the thermal cross-talk will depend on the choice of materials and filter structures and the ring-ring coupling region, on the thermal isolation among the two rings and on the structure, layout and -thermal coupling of the respective heaters. In general, for a given target difference in the ring mean temperature to be maintained, the higher is the thermal cross-talk, the higher is the difference in the heat radiated by the two heaters associated to the two rings and consequently the higher is the total power consumption. Since typically the higher is the difference in the heat radiated by the two heaters the higher is also the difference in the temperatures of the two heaters, this results also in a higher thermal wear and tear.

Accordingly, it is advantageous to keep the resonance separation less than or equal to about 1000 GHz, more preferably less than or equal to about 800 GHz, even more preferably less than or equal to about 600 GHz. These maximum values are consistent with the fact that, as now clear from figure 16, the loss (and dispersion) hit asymptotically tend to a limit value (exemplarily about 0.3 dB for the loss hit and about 100 ps/hm for the dispersion hit).

Going back to figure 15, it becomes clear that the relation between the FSR of the first 452 and second 454 ring selected in accordance to the above, i.e. FSR_{1A} -2Δ ≥ FSR_{2A} ≥ FSR_{1A}/2+Δ+, allows that, during the tuning operation from the disablement to the enablement of the filter, each resonance (at most two) of the first ring 452 in the optical bandwidth BW of interest can be kept at distance from the respective nearest resonance of the second ring of at least the quantity Δ. In other words, not only the two previously enabled resonances (of a given order n₁ and n₂) are properly disabled, but also the two resonances having the successive higher order (n₁+1, n₂+1) and the two resonances having the respective previous order (n₁-1 and n₂-1). The quantity Δ is selected as a function of the value of FSR_{1A} according to the following expression: 1/6*FSR_{1A} ≥ Δ ≥ 0.05*FSR_{1A}.

Referring now back to Fig. 14, in step 1440 the filter is enabled again. The 'enabling' step 1440 may be performed by replicating back the same steps followed for filter disabling 1420 with the role of the two rings mutually exchanged, as shown in Fig. 14. With reference to Fig. 14, exemplarily the resonance of the one resonator (curve 1400) is maintained at the target frequency while then resonance of the other resonator (curve 1410) is moved toward the target frequency.

Once enabled (state 1450), a respective optical resonance of each one of the plurality of resonators falls within a frequency band, having the bandwidth described above for the initial frequency band and typically comprising the center optical frequency allocated for the final WDM channel (exemplarily channel 6).

The resonances defined above are hereinafter called 'final resonances of interest' and their number equates the initial resonances of interest. While in Fig. 14 the initial and final channels are filtered by way of the same resonances of the two rings translated in frequency (i.e. the final resonances of interest have the same order of the initial resonances of interest), in another embodiment the order of the final resonances of interest, of at least one of the plurality of resonators, may be different from that of the initial resonances of interest. In this latter embodiment it is possible to span over the whole optical bandwidth BW by using at most three orders of resonance of the first optical filter.

Advantageously, the final resonances of interest have the same order of the initial resonances of interest and the initially filtered channel is distant from the finally filtered channel by more than the free spectral range of the second ring 454.

The specific starting and ending points of the dynamic steps 1420, 1430 and 1440 shown in Fig. 14 are purely conventional and for illustrative purpose only. This is particularly true when determining the boundaries between filter disabling and filter tuning and between filter tuning wand filter enabling. Conventionally, the ending point of the disabling step (which coincides with the starting point of the tuning step) may be taken at the instant when the separation between the resonances of interest reaches a given predetermined value, which in any case needs to be not less than .50. GHz. Similarly, the starting point of the enabling step may be taken at the instant when the separation between the resonances of interest goes below a further given predetermined value, which may be equal to the predetermined value above or different, but in any case not less than 50 GHz. Exemplarily, in Fig. 14 the end of disablement and the start of enablement both are conventionally taken at one and half times the WDM channel spacing for curves 1400 and 1410. However, the position in time of the end and start points above changes while changing the above predetermined value(s).

It is advantageous to avoid that any resonance of each resonator of the filter hits a thru channel when the relative distance between such resonance and the respective closest resonance of any other resonator is less than the resonance separation between the closest resonances set for the filter massive tuning step (in Fig. 14 the hits to be preferably avoided correspond to state B and B' for curve 1400 and 1410 and state A and A' for curve 1400' and 1410'). In particular, this is true in case the maximum resonance separation during the tuning procedure is less than or equal to two times the channel spacing. In case the maximum resonance separation is larger than two times the channel spacing, the Applicant has found a solution that avoids any hit of any resonance in correspondence to a distance with the respective closest resonance smaller than two times the channel spacing.

Moreover, the Applicant has found that it is particularly advantageous to avoid that any resonance of the second resonator 454 hits a thru channel when the relative distance of such resonance with respect to the closest resonance of the first resonator is equal to or less than the channel spacing.

The Applicant has found a solution to the problem above, the various embodiments of which are shown in Figs. 17A to C, wherein the same reference signs of Fig. 14 have been used for the same features, where applicable, and the same exemplary assumptions made for Fig. 14 are used. In general, the solution envisages that during enabling and/or during disabling step, at least one among the initial resonances of interest (and/or respectively the final resonances of interest) is moved in the frequency spectrum outside the region of the frequency spectrum comprised between the initial channel and the final channel ('resonance, overshooting'). Preferably, said at least one initial and/or final resonance of interest belongs to the first resonator coupled closest to the input-to-thru waveguide.

Fig. 17A shows various possible embodiments of the tuning technique in accordance to the preferred solution. The reference sign 1700A refers to three possible alternative trajectories (dotted, solid and dashed curves) of the resonance of interest of one of the two resonators and the reference sign 1710A refers to three possible alternative trajectories of the resonance of interest of the other of the two resonators. In particular, dotted lines show an exemplary variant of the trajectory pattern. Independently from the symbol used (respectively dotted, solid and dashed), any combination obtained by a choice of one out of the three curves 1700A and one out of the three curves 1710A is suitable A choice in accordance with the same symbol (respectively dotted, solid and dashed) gives an exemplary maximum resonance separation (during massive tuning) equal to 1.5 times the channel spacing. Curves 1720A and 1730A (dot-dashed) show further possible alternative paths of the resonance curves wherein the massive filter tuning step 1430 may be considered absent. The main difference with respect to the method described with reference to Fig. 14 is that now during both the step 1420 of filter disabling and the step 1440 of filter enabling, one of the two resonators is tuned so that the respective relevant resonance moves in the frequency spectrum staying on opposite sides with respect to, respectively, the initial frequency and the final one. As a consequence, any hit before the maximum resonance separation is reached (e.g. any hit during the enabling and the disabling steps) can be avoided, as long as the maximum resonance distance does not exceed the value of twice the channel frequency spacing. In Fig. 17A, curves 1700A and 1710A, the hits occur solely during massive tuning step, in a total number of six in correspondence to the dotted and solid curves, which increases up to eight hits (hitting also channel 1 and 7) choosing both the dashed curves. Moreover, in case the maximum separation does exceed the double of the frequency spacing, the present solution allows avoiding any hit in correspondence to a resonance separation less than twice the frequency spacing. Due to the point symmetrical configuration of the patterns 1700A and 1710A shown in Fig 17A, the overall power hit of the entire procedure is not affected by the choice of which one of the two rings (the one coupled closest to the input-to-thru waveguide or the other) corresponds to curve 1700A or 1710A. In particular, the resonator whose resonance of interest overshoots during disabling of the filter is different from the resonator whose resonance of interest overshoots during enabling of the filter.

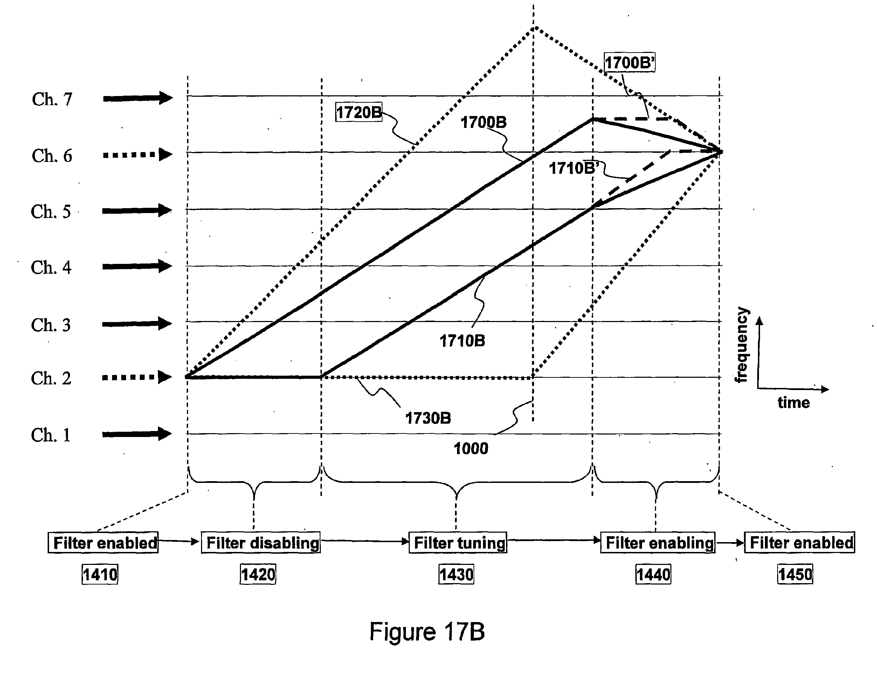

Fig. 17B shows alternative embodiments of the tuning technique While the disabling step is similar to that described in Fig. 14, the enabling step is now performed in accordance to the technique shown in Fig. 17A. Due to the asymmetry of the pattern of Fig. 17B, the hits occurring when curve 1700B corresponds to the first ring and curve 1710B corresponds to the second one are different from the hits occurring when curve 1700B corresponds to the second ring and curve 1710B corresponds to the first one. In accordance to a preferred embodiment, it is at least the ring coupled closest to the input-to-thru waveguide (first ring 452) which overshoots with respect to the tuning range which starts from the initial frequency and ends at the final one. Curve 1700B corresponds to the first ring 452 while curve 1710B corresponds to the second ring 454. Curves 1700B' and 1710B' show possible alternative paths of the resonance curves 1700B and 1710B, respectively. Curves 1720B (first ring) and 1730B (second ring) show further possible alternative paths of the resonance curves, respectively, wherein the massive filter tuning step 1430 may be conventionally assumed as shown in the figure or it may be considered absent. The patterns used for the enabling and disabling steps may be mutually exchanged provided that care is taken to mutually exchange also the roles of the too rings. The main difference with respect to Fig. 17A is that now a hit is tolerated at a resonance separation (exemplarily equal to the channel spacing during filter disabling) less than two times the channel spacing, provided that care is taken that this hit is caused by the first ring 452. An advantage of the preset embodiment is that the maximum frequency tuning range spanned by both the rings is lower than those shown in Fig. 17A.

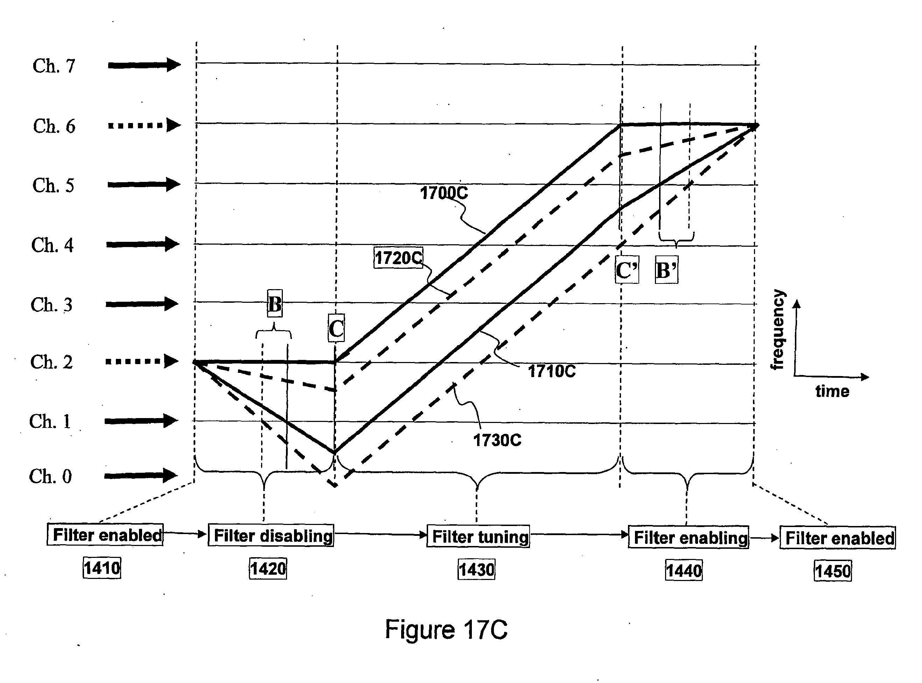

Fig. 17C shows two further alternative embodiments of the tuning technique Curves 1700C and 1720C refer to the second resonator and curves 1710C and 1730C are the corresponding trajectories respectively associated to the first resonator. Also in this case the patterns are asymmetric, with the same implications described above with reference to Fig. 17B. The main difference is that now, while the resonance of the first resonator overshoots (exemplarily in the disabling step), the other resonator may remain unperturbed (curve 1700C) or it may slightly 'overshoot' in the same direction of the distal resonator (curve 1720C). Again, the pattern allows that the hit in states B and B' is caused by the first ring and it is thus mitigated.

Any combination of the patterns shown in Fig. 17A to 17C is contemplated It is noted that in all embodiments of Figs. 17A-C, either during enabling or during disabling at least the resonance of the first ring is preferably moved in the opposite direction with respect to that needed for going from the initial frequency to the final one.

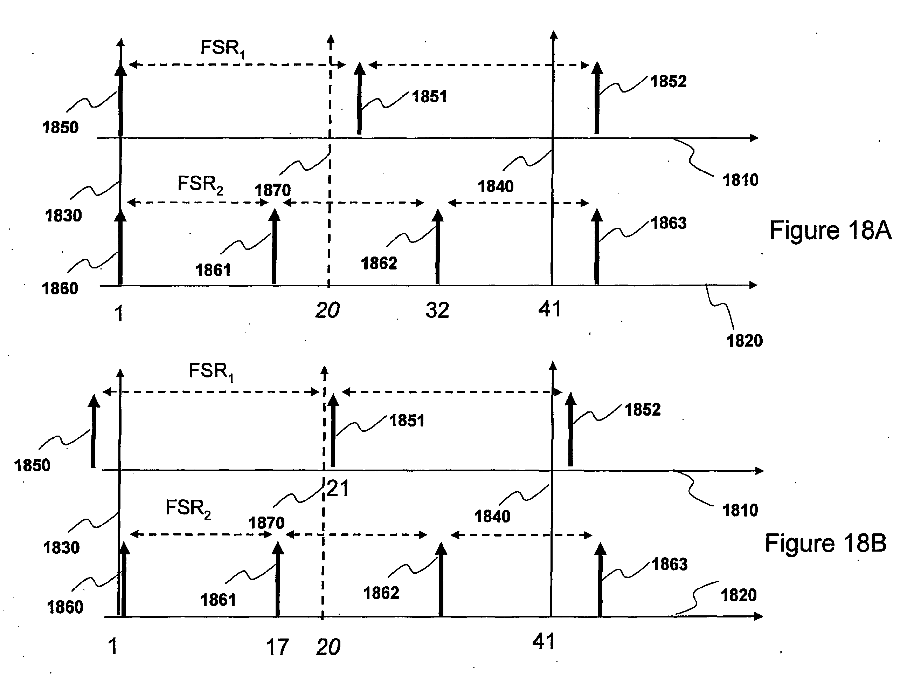

Referring now to figures 18A-D, an exemplary method of tuning a two-ring filter 450 of the kind described with reference to figure 4 will be described. The exemplary method of tuning is in accordance with those illustrated in figure 17A.

In figure 18A-D the upper horizontal axis 1810 represents the distribution along the frequency domain of the resonances of the first ring 452, having exemplarily the FSR equal to 2350 GHz, and the lower horizontal axis 1820 represents the distribution along the frequency domain of the resonances of the second ring 454, having exemplarily the FSR equal tao 1550 GHz.

Thin arrows 1830 and 1840 represent the ending points of the WDM optical bandwidth, exemplarily 4000 GHz wide. Assuming that the frequency spacing is equal to 100 GHz and that the channel having index 1 occupies the end point 1830, the 41^{st} channel occupies the other end point 1840.

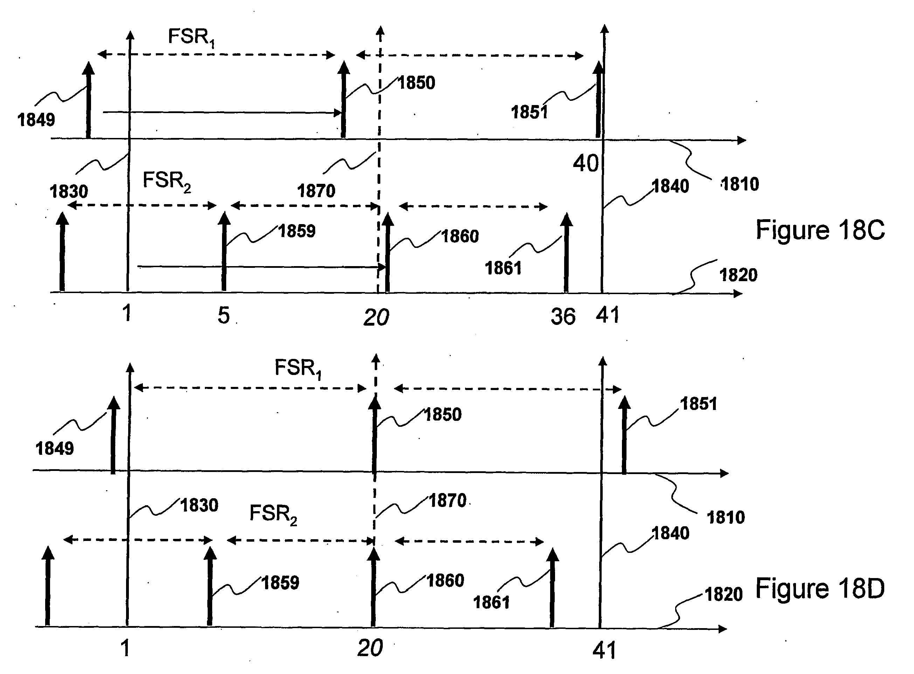

In the state shown in figure 18A, corresponding to state 1410 of figure 17A, the filter is -enabled, i.e. a resonance of interest 1850 (having order n₁) of the first ring and a resonance of interest 1860 (having order n₂) of the second ring are properly aligned at the frequency of the 1^{st} channel. The higher order resonance 1851 (having order n₁+1) adjacent to the resonance of interest of the first ring falls midway between the 24^{th} and the 25^{th} channel. The resonance 1852 having order n₁+2 and the lower order resonance 1849 (shown in figures 18C-D) having order n₁-1 fall outside the WDM band. Similarly, the higher order resonance 1861 (having order n₂+1) adjacent to the resonance of interest of the second ring falls midway between the 16^{th} and the 17^{th} channel and the successive resonance 1862 (having order n₂+2) of the first ring falls at the frequency of the 32^{nd} channel. The resonance 1863 having order n₂+3 and the lower order resonance 1859 (shown in figures 18C-D) having order n₂-1 fall outside the WDM band. The distance between the only in-band resonance 1851 other than the resonance of interest 1850 of the first ring and the closest resonance of the second ring, i.e. resonance 1862 is equal to 750 GHz.

It is assumed that the filter 450 is tuned from initial channel 1 to the final channel indexed 20, shown with the dashed arrow 1870 in figures 18A-D. It is also assumed that the resonators of the optical filter in the state shown in figure 18A can be tuned towards the right of the figure, e.g. by way of heating of the silicon resonators, by at least the FSR of the first ring, while they can be tuned towards the left of the figure only by a small frequency shift, suitable for the disabling operation of the filter (e.g. few hundreds of GHz). This is a practical constraint which typically occurs, for example, in case of thermal tuning, when the state of figure 18A corresponds to an operating temperature of the ring comparable to the room temperature (e.g. about 20-50°C). In this case, while heating the resonators is relatively simple and fast, cooling them would be cumbersome, energy consuming and slow.

Figure 18B shows the state achieved at the end of the disabling step 1420 of figure 17A. here, the second ring is moved by 50 GHz (less than the channel spacing to avoid hit on the second channel) towards the right and the second ring towards the left by 350 GHz. Accordingly, the resonances of interest 1850 and 1860 are about 400 GHz far and the higher order resonance 1851 (which happens to fall on the 21^{st} channel) is also 400 GHz far from the closest resonance of the second ring, which now is resonance 1861.

Figure 18C shows the massive tuning step 1430, wherein the first and second ring are simultaneously tuned by 1900 GHz towards the right so as to keep the mutual distances between the resonances of the two rings unchanged.

Finally, figure 18D shows the enabled state 1450 with the final resonance of interest 1850, 1860, of the same order of the initial resonance of interest, now aligned at the frequency of 20^{th} channel.

Including the respective overshooting, the total tuning of the first ring is about 2250 GHz and the one of the second ring is about 1950 GHz. It is to be noted that the second ring is tuned by more than its FSR.

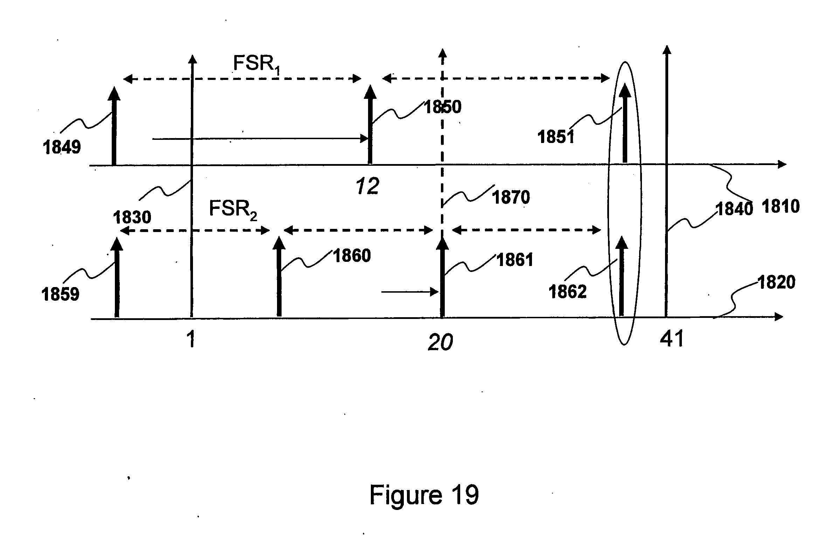

In order to illustrate the advantage of the tuning of the second ring by more than its FSR, reference is now done to a comparative example shown in figure 19. The filter is identical to the one of the example of figure 18A-D and again it is assumed that it is tuned from the first to the 20^{th} channel. The difference is that now, after the disabling step 1420, the second ring is tuned only by the shift necessary to align the resonance of higher order 1861 adjacent to the initial resonance of interest 1860 at the target frequency, i.e. by 300 GHz towards the right. However, during the massive tuning of the first ring by 1900 GHz, a crossing (illustrated by the oval in the figure) occurs between the respective higher order resonances 1851 and 1862 at a frequency midway between the 35^{th} and the 36^{th} channels. This cross gives rise to an un-acceptable power and/or dispersion hit to at least the 35^{th} and the 36^{th} thru channels.

It is further noted that as exemplarily shown in figures 18A-D, roughly the first half of the WDM optical bandwidth is spanned by the resonance 1850 of the first ring and roughly the other half of the optical bandwidth is spanned by the successive higher order resonance 1851.

The optical device 200 of figure 12 may be tuned from an initial processed channel to a final one by separately operating each of the optical filter 450, 460 and 470 according to the above. The filters may be operated contemporarily or not.

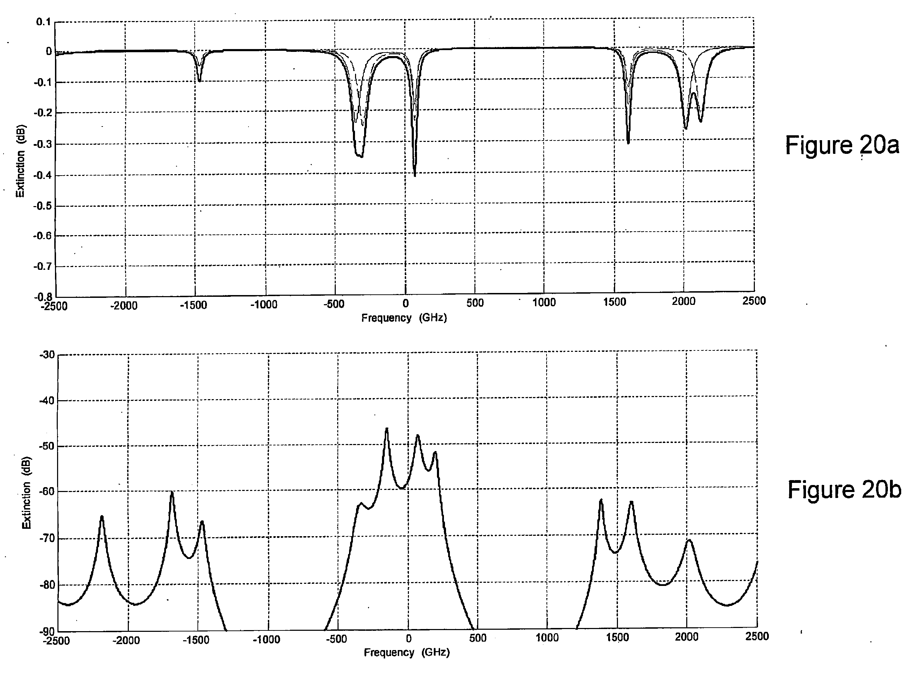

Exemplarily, figures 20a and 20b show respectively the thru (at port 468) and the drop (at port 478) response of the optical filter shown in figure 12 with the functional and structural parameters of the optical filters 450, 460 and 470 as exemplarily described above. In figures 18a and 18b, all three filters 450, 460 and 470 are in the disabled conditions of the kind shown in figure 15; i.e. a resonance of each respective second ring 454, 464, 474 at +70 GHz, a resonance of the first ring 452 of the first filter at -300 GHz, a resonance of the first ring 462 of the second filter at -300 GHz and a resonance of the first ring 472 of the third filter at -300 GHz. It is clear that no in-band resonance induce significant distortion in the spectra.

Although the present invention has been disclosed and described by way of some embodiments, it is apparent to those skilled in the art that several modifications to the described embodiments, are possible without departing from the appended claims.

## Claims

1. An optical device (200) for processing an optical signal comprising a plurality of channels lying on a grid of optical frequencies equally spaced by a frequency spacing and occupying an optical bandwidth, the optical device comprising:
- a first optical filter (450) comprising:
- a first optical path (430) apt to receive said optical signal;
- a first resonator (452) optically coupled adjacently with the first optical path and having a first free spectral range
- a second resonator (454) optically coupled adjacently with the first resonator and having a second free spectral range ;and
- a second optical path (456) optically coupled with the second resonator; and
- a second optical filter (460) comprising:
- a third optical path (440) optically connected to the first optical path (430);
- a third resonator (462) optically coupled adjacently to the third optical path and having a third free spectral range ; and
- a fourth optical path (466) optically coupled with the third resonator.
**characterized in that**
the first free spectal rampe is less than or equal to said optical bandwidth and exceeds the half of said optical bandwidth by more than said frequency spacing;
the second free spectral range is less than or equal to two thirds of said first free spectral range and is greater than or equal to 0.55 times said first free spectral range; and
the third free spectral range differs in absolute value from the free spectral range by more than a quarter of said frequency spacing.

2. The device of claim 1 wherein said third free spectral range differs, in absolute value, from the first free spectral range by less than five times said frequency spacing, preferably by less than three quarters of said frequency spacing.

3. The device of any of the preceding claims wherein the second optical filter (460) further comprises a fourth resonator (464), having a fourth free spectral range, optically coupled in close proximity with the third resonator and interposed between said third resonator and said fourth optical path (466).

4. The device of the preceding claim wherein said fourth free spectral range is less than or equal to two thirds of said third free spectral range and is greater than or equal to 0.55 times said third free spectral range.

5. The device of any of claims 1 to 4 wherein said first optical filter (450) and/or said second optical filter (460) comprises two and no more than two resonators (452, 454, 462, 464).

6. The device of any of claims 1 to 5 wherein said third optical path (440) and said first optical path (430) are one and the same optical waveguide.

7. The device of any of claims 1 to 6, further comprising a control system (270, 272, 251, 253; 480, 482) operatively connected to the first and second resonator of the first optical filter (450), the control system being configured to tune at least one among the first and the second resonator differentially from the other resonator.

8. The device of claim 3 and any of claims 4 to 7 when depending on claim 3, wherein said control system (270, 272, 251, 253; 480, 482) is operatively connected to the third and fourth resonator of the second optical filter (460), the control system being configured to tune at least one among the o third and the fourth resonator differentially from the other resonator.

9. The device of claim 7 or 8, wherein said control system is configured to perform the steps of: a) operating the first optical filter (450) so that a respective resonance of each one of said first and second resonator falls within a first frequency band having bandwidth less than or equal to 15 GHz:b) operating the first optical filter (450) so as to obtain a separation value between any resonance of the first resonator falling within the optical bandwidth with respect to a respective resonance of the second resonator nearest to said any resonance, said separation value being greater than or equal to 50 GHz; c) operating said first optical filter (450) so that said respective resonance of each one of said first and second resonator falls within a second frequency band, different from the first frequency band, having bandwidth less than or equal to 15 GHz.

10. The device of claim 9, wherein, after step b), said any resonance of the first resonator falling within the optical bandwidth is maintained at a distance from said respective resonance of the second resonator nearest to said any resonance by at least said separation value until said distance of said any resonance of the first resonator and said respective nearest resonance of the second resonator becomes smaller than said separation value while step c) is being performed.

11. The device of claim 9 or 10 wherein said control system is configured to perform, between the step b) and the step c), the further step of: d) tuning all the resonators of the optical filter so as to move all respective resonances of the resonators by a respective frequency interval greater than said frequency spacing while maintaining said any resonance of the first resonator falling within the optical bandwidth at a distance from said respective resonance of the second resonator nearest to said any resonance by at least said separation value.

12. The device of claim 11, wherein in step d) all the resonators are tuned substantially simultaneously.

13. The device of any of claims 9 to 12, wherein during the procedure from step a) to step c), at least one and preferably both of said respective resonance of said first resonator and said respective resonance of said second resonator is moved outside a frequency region extending from the first to the second frequency band.

14. The device of any of claims 9 to 13 wherein said separation value is greater than or equal to 200 GHz, preferably greater than or equal to 300 GHz, and more preferably less than or equal to 1000 GHz.

15. The device of any of the preceding claims wherein said frequency spacing is greater than or equal to 100 GHz.

16. The device of any of the preceding claims wherein said optical bandwidth is at least 2000 GHz.

17. The device of any of the preceding claims wherein said resonators are microring or racetrack resonators.

18. The device of any of the preceding claims wherein a first coupling coefficient between the first resonator (452) of the first optical filter (450) and the first optical path (430) is greater than of equal to 15%.

19. The device of any of the preceding claims further comprising a third optical filter (470) comprising:
- a fifth optical path (490) optically connected to the second optical path (456);
- a fifth resonator (472) optically coupled adjacently to the fifth optical path; and
- a sixth optical path (476) optically coupled with the fifth resonator;
wherein a second coupling coefficient between the fifth resonator (472) and the fifth optical path (490) is less than or equal to 12%.

20. An optical communication system (100) comprising a transmitter (110), a receiver (120), an optical line (130) optically connecting the transmitter and the receiver and an optical device (200) according to any of the preceding claims, wherein the optical device (200) is coupled along the optical line (130).

## Patentansprüche

1. Optische Vorrichtung (200) zur Verarbeitung eines optischen Signals umfassend eine Vielzahl von Kanälen auf einem Gitter von optischen Frequenzen, die mit einem Frequenzabstand gleichmäßig beabstandet sind und eine optische Bandbreite belegen, wobei die optische Vorrichtung folgendes umfasst:
- einen ersten optischen Filter (450) umfassend:
- eine erste optische Strecke (430) zum Empfang des benannten optischen Signals;
- einen ersten Resonator (452), der mit der ersten optischen Strecke anliegend optisch gekoppelt ist und einen ersten freien Spektralbereich besitzt;
- einen zweiten Resonator (454), der mit dem ersten Resonator anliegend optisch gekoppelt ist und einen zweiten freien Spektralbereich besitzt; und
- eine zweite optische Strecke (456), die mit dem zweiten Resonator optisch gekoppelt ist; und
- einen zweiten optischen Filter (460) umfassend:
- eine dritte optische Strecke (440), die mit der ersten optischen Strecke (430) optisch verbunden ist;
- einen dritten Resonator (462), der mit der dritten optischen Strecke anliegend optisch gekoppelt ist und einen dritten freien Spektralbereich besitzt;
- eine vierte optische Strecke (466), die mit dem dritten Resonator optisch gekoppelt ist,
**dadurch gekennzeichnet, daß**
der erste freie Spektralbereich kleiner ist als oder gleich die benannte optische Bandbreite und halb die benannte Bandbreite um mehr als den benannten Frequenzabstand überschreitet;
der zweite freie Spektralbereich kleiner ist als oder gleich zwei Drittel des benannten ersten Spektralbereichs und größer ist als oder gleich 0,55-fach des benannten ersten Spektralbereichs; und
der dritte freie Spektralbereich sich als Absolutwert vom ersten freien Spektralbereich um mehr als einen Viertel des benannten Frequenzabstands unterscheidet.

2. Vorrichtung nach Anspruch 1, worin der benannte dritte Spektralbereich sich als Absolutwert vom ersten freien Spektralbereich um weniger als fünf-fach des benannten Frequenzabstands unterscheidet, bevorzugt um weniger als drei Viertel des benannten Frequenzabstands.

3. Vorrichtung nach irgendeinem der vorherigen Ansprüche, worin der zweite optische Filter (460) einen vierten Resonator (464) mit einem vierten freien Spektralbereich weiter umfasst, der mit dem dritten Resonator in unmittelbarer Nähe gekoppelt ist und zwischen dem benannten dritten Resonator und der benannten vierten optischen Strecke (466) liegt.

4. Vorrichtung nach dem vorherigen Anspruch, worin der benannte vierte freie Spektralbereich weniger ist als oder gleich zwei Drittel des benannten dritten Spektralbereichs und größer ist als oder gleich 0,55-fach des benannten dritten Spektralbereichs.

5. Vorrichtung nach irgendeinem der Ansprüche 1 bis 4, worin der benannte erste optische Filter (450) und/oder der benannte zweite optische Filter (460) zwei und nicht mehr als zwei Resonatoren (452, 454, 462, 464) umfasst.

6. Vorrichtung nach irgendeinem der Ansprüche 1 bis 5, worin die benannte dritte optische Strecke (440) und die benannte erste optische Strecke (430) denselben optischen Wellenleiter darstellen.

7. Vorrichtung nach irgendeinem der Ansprüche 1 bis 6, weiter umfassend eine Steuerung (270, 272, 251, 253; 480, 482), die mit dem ersten und dem zweiten Resonator des ersten optischen Filters (450) operativ verbunden ist, wobei die Steuerung zur Abstimmung von mindestens einem vom ersten und zweiten Resonator unterschiedlich vom anderen Resonator konfiguriert ist.

8. Vorrichtung nach Anspruch 3 und nach irgendeinem der Ansprüche 4 bis 7, wenn sie vom Anspruch 3 abhängen, worin die benannte Steuerung (270, 272, 251, 253; 480, 482) mit dem dritten und dem vierten Resonator des zweiten optischen Filters (460) operativ verbunden ist, wobei die Steuerung zur Abstimmung von mindestens einem vom dritten und vierten Resonator unterschiedlich vom anderen Resonator konfiguriert ist.

9. Vorrichtung nach Anspruch 7 oder 8, worin die benannte Steuerung zur Durchführung der folgenden Schritte konfiguriert ist: a) Aktivierung des ersten optischen Filters (450), so daß eine entsprechende Resonanz jedes der benannten ersten und zweiten Resonator unter ein erstes Frequenzband mit einer Bandbreite kleiner als oder gleich 15 GHz fällt; b) Aktivierung des ersten optischen Filters (450), um einen Trennwert zwischen irgendeiner Resonanz des ersten Resonators, die unter die optische Bandbreite fällt, und einer entsprechenden Resonanz des zweiten Resonators, die am nächsten zur benannten irgendeinen Resonanz liegt, zu erhalten, wobei der benannte Trennwert größer als oder gleich 50 GHz ist; c) Aktivierung des benannten ersten optischen Filters (450), so daß die benannte entsprechende Resonanz jedes der benannten ersten und zweiten Resonator unter ein zweites Frequenzband, das verschieden vom ersten Frequenzband ist, mit einer Bandbreite kleiner als oder gleich 15 GHz fällt.

10. Vorrichtung nach Anspruch 9, worin nach Schritt b) die benannte irgendeine Resonanz des ersten Resonators, die unter die optische Bandbreite fällt, mit einem Abstand von der benannten entsprechenden Resonanz des zweiten Resonators, die am nächsten zur benannten irgendeinen Resonanz liegt, durch mindestens den benannten Trennwert aufrechterhalten wird, bis der benannte Abstand der benannten irgendeinen Resonanz des ersten Resonators und der benannten entsprechenden am nächsten liegenden Resonanz des zweiten Resonators kleiner als der benannte Trennwert wird, während der Schritt c) durchgeführt wird.

11. Vorrichtung nach Anspruch 9 oder 10, worin die benannten Steuerung konfiguriert ist zur Durchführung zwischen Schritt b) und c) des weiteren Schrittes: d) Abstimmung von allen Resonatoren des optischen Filters, um alle entsprechenden Resonanzen der Resonatoren um einen entsprechenden Frequenzbereich zu verschieben, der größer ist als der benannte Frequenzabstand, wobei die benannte irgendeine Resonanz des ersten Resonators, die unter die optische Bandbreite fällt, mit einem Abstand von der benannten entsprechenden Resonanz des zweiten Resonators, die am nächsten zur benannten irgendeinen Resonanz liegt, durch mindestens den benannten Trennwert aufrechterhalten wird.

12. Vorrichtung nach Anspruch 11, worin in Schritt d) alle Resonatoren wesentlich gleichzeitig abgestimmt werden.

13. Vorrichtung nach irgendeinem der Ansprüche 9 bis 12, worin von Schritt a) zu Schritt c) mindestens eine und bevorzugt sowohl die benannten entsprechende Resonanz des benannten ersten Resonators als auch die benannte entsprechende Resonanz des benannten zweiten Resonators aus einem Frequenzbereich verschoben werden, der sich vom ersten zum zweiten Frequenzband erstreckt.

14. Vorrichtung nach irgendeinem der Ansprüche 9 bis 13, worin der benannte Trennwert höher ist als oder gleich 200 GHz, bevorzugt höher als oder gleich 300 GHz, und mehr bevorzugt kleiner oder gleich 1000 GHz.

15. Vorrichtung nach irgendeinem der vorherigen Ansprüche, worin der benannte Frequenzabstand größer ist als oder gleich 100 GHz.

16. Vorrichtung nach irgendeinem der vorherigen Ansprüche, worin die benannte optische Bandbreite mindestens 2000 GHz beträgt.

17. Vorrichtung nach irgendeinem der vorherigen Ansprüche, worin die benannte Resonatoren Mikroring- oder Rennbahn-Resonatoren sind.

18. Vorrichtung nach irgendeinem der vorherigen Ansprüche, worin ein erster Kopplungskoeffizient zwischen dem ersten Resonator (452) des ersten optischen Filters (450) und der ersten optischen Strecke (430) höher ist als oder gleich 15%.

19. Vorrichtung nach irgendeinem der vorherigen Ansprüche, weiter umfassend einen dritten optischen Filter (470) umfassend:
- eine fünfte optische Strecke (490), die mit der zweiten optischen Strecke (456) optisch verbunden ist;
- einen fünften Resonator (472), der mit der fünften optischen Strecke anliegend optisch gekoppelt ist; und
- eine sechste optische Strecke (476), der mit dem fünften Resonator optisch gekoppelt ist;
worin ein zweiter Kopplungskoeffizient zwischen dem fünften Resonator (472) und der fünften optischen Strecke (490) kleiner ist als oder gleich 12%.

20. Optisches Kommunikationssystem (100) umfassend einen Sender (110), einen Empfänger (120), eine optische Leitung (130), die den Sender und den Empfänger optisch verbindet, und eine optische Vorrichtung (200) nach irgendeinem der vorherigen Ansprüche, worin die optische Vorrichtung (200) entlang der optischen Leitung (130) gekoppelt ist.

## Revendications

1. Dispositif optique (200) pour traiter un signal optique comprenant une pluralité de canaux sur une grille de fréquences optiques également espacées par un espacement de fréquences et occupant une largeur de bande optique, le dispositif optique comprenant:
- un premier filtre optique (450) comprenant:
- un premier parcours optique (430) apte à recevoir ledit signal optique;
- un premier résonateur (452) couplé optiquement attenant au premier parcours optique et ayant un premier domaine spectral libre;
- un deuxième résonateur (454) couplé optiquement attenant au premier résonateur et ayant un deuxième domaine spectral libre;
- un deuxième parcours optique (456) couplé optiquement avec le deuxième résonateur; et
- un deuxième filtre optique (460) comprenant:
- un troisième parcours optique (440) relié optiquement au premier parcours optique (430);
- un troisième résonateur (462) couplé optiquement attenant au troisième parcours optique et ayant un troisième domaine spectral libre; et
- un quatrième parcours optique (466) couplé optiquement avec le troisième résonateur,
**caractérisé en ce que**
le premier domaine spectral libre est inférieur ou égal à ladite largeur de bande optique et est supérieur à la moitié de ladite largeur de bande optique de plus que ledit espacement de fréquences;
le deuxième domaine spectral libre est inférieur ou égal à deux tiers dudit premier domaine spectral libre et est supérieur ou égal à 0,55 fois ledit premier domaine spectral libre; et
le troisième domaine spectral libre diffère en valeur absolue du premier domaine spectral libre de plus d'un quart dudit espacement de fréquences.

2. Dispositif selon la revendication 1, où ledit troisième domaine spectral libre diffère en valeur absolue du premier domaine spectral libre de moins de cinq fois ledit espacement de fréquences, de préférence moins de trois quarts dudit espacement de fréquences.

3. Dispositif selon une quelconque des revendications précédentes, où le deuxième filtre optique (460) comprend en outre un quatrième résonateur (464) ayant un quatrième domaine spectral libre, couplé optiquement en étroite proximité avec le troisième résonateur et placé entre ledit troisième résonateur et ledit quatrième parcours optique (466).

4. Dispositif selon la revendication précédente, où ledit quatrième domaine spectral libre est inférieur ou égal à deux tiers dudit troisième domaine spectral libre et est supérieur ou égal à 0,55 fois ledit troisième domaine spectral libre.

5. Dispositif selon une quelconque des revendications 1 à 4, où ledit premier filtre optique (450) et/ou ledit deuxième filtre optique (460) comprend deux et non plus de deux résonateurs (452, 454, 462, 464).

6. Dispositif selon une quelconque des revendications 1 à 5, où ledit troisième parcours optique (440) et ledit premier parcours optique (430) sont une et la même guide d'ondes.

7. Dispositif selon une quelconque des revendications 1 à 6, comprenant un système de commande (270, 272, 251, 253; 480, 482) relié de façon opérationnelle au premier et au deuxième résonateur du premier filtre optique (450), le système de commande étant configuré pour régler au moins un entre ledit premier et deuxième résonateur de façon différentielle par rapport à l'autre résonateur.

8. Dispositif selon la revendication 3 et une quelconque des revendications 4 à 7 lorsqu'elles dépendent de la revendication 3, où ledit système de commande (270, 272, 251, 253; 480, 482) est relié de façon opérationnelle au troisième et au quatrième résonateur du deuxième filtre optique (460), ledit système de commande étant configuré pour régler au moins un entre ledit troisième et quatrième résonateur de façon différentielle par rapport à l'autre résonateur.

9. Dispositif selon la revendication 7 ou 8, où ledit système de commande est configuré pour exécuter les étapes suivantes: a) activer le premier filtre optique (450) de sorte qu'une résonance respective de chacun dudit premier et deuxième résonateur se trouve dans une première bande de fréquences ayant une largeur de bande inférieure ou égale à 15 GHz; b) activer le premier filtre optique (450) afin d'obtenir une valeur de séparation entre toute résonance du premier résonateur se trouvant dans la largeur de bande optique par rapport à une résonance respective du deuxième résonateur la plus proche de ladite toute résonance, ladite valeur de séparation étant supérieure ou égale à 50 GHz; c) activer ledit premier filtre optique (450) de sorte que ladite résonance respective de chacun dudit premier et deuxième résonateur se trouve dans une deuxième bande de fréquences, différente de la première bande de fréquences, ayant une largeur de bande inférieure ou égale à 15 GHz.

10. Dispositif selon la revendication 9, où après l'étape b) ladite toute résonance du premier résonateur se trouvant dans la largeur de bande optique est maintenue à une distance de ladite résonance respective du deuxième résonateur la plus proche de ladite toute résonance par au moins ladite valeur de séparation jusqu'à ce que ladite distance de ladite toute résonance du premier résonateur et ladite résonance respective la plus proche du deuxième résonateur devient plus petite que ladite valeur de séparation pendant l'exécution de l'étape c).

11. Dispositif selon la revendication 9 ou 10, où ledit système de commande est configuré pour exécuter entre l'étape b) et l'étape c) une autre étape: d) régler tous les résonateurs du filtre optique de sorte à déplacer toutes les résonances respectives des résonateurs d'un intervalle de fréquences respectif supérieur audit espacement de fréquences tout en maintenant ladite toute résonance du premier résonateur se trouvant dans la largeur de bande optique à une certaine distance de ladite résonance respective du deuxième résonateur la plus proche de ladite toute résonance par au moins ladite valeur de séparation.

12. Dispositif selon la revendication 11, où dans l'étape d) tous les résonateurs sont réglés substantiellement de façon synchronisée.

13. Dispositif selon une quelconque des revendications 9 à 12, où pendant le passage de l'étape a) à l'étape c) au moins une et préférablement autant ladite résonance respective dudit premier résonateur que ladite résonance respective dudit deuxième résonateur sont déplacées hors d'une région de fréquences s'étendant de la première à la deuxième bande de fréquences.

14. Dispositif selon une quelconque des revendications 9 à 13, où ladite valeur de séparation est supérieure ou égale à 200 GHz, préférablement supérieure ou égale à 300 GHz, et plus préférablement supérieure ou égale à 1000 GHz.

15. Dispositif selon une quelconque des revendications précédentes, où ledit espacement de fréquences est supérieur ou égal à 100 GHz.

16. Dispositif selon une quelconque des revendications précédentes, où ladite largeur de bande optique est au moins de 2000 GHz.

17. Dispositif selon une quelconque des revendications précédentes, où lesdits résonateurs sont des résonateurs à micro-anneau ou à pistes.

18. Dispositif selon une quelconque des revendications précédentes, où un premier coefficient de couplage entre le premier résonateur (452) du premier filtre optique (450) et le premier parcours optique (430) est supérieur ou égal à 15%.

19. Dispositif selon une quelconque des revendications précédentes, comprenant en outre un troisième filtre optique (470) comprenant:
- un cinquième parcours optique (490) relié optiquement au deuxième parcours optique (456);
- un cinquième résonateur (472) couplé optiquement en proximité au cinquième parcours optique; et
- un sixième parcours optique (476) couplé optiquement au cinquième résonateur;
où un deuxième coefficient de couplage entre le cinquième résonateur (472) et le cinquième parcours optique (490) est inférieur ou égal à 12%.

20. Système de communication optique (100) comprenant un transmetteur (110), un récepteur (120), une ligne optique (130) reliant optiquement le transmetteur et le récepteur, et un dispositif optique (200) selon une quelconque des revendications précédentes, où le dispositif optique (200) est couplé le long de la ligne optique (130).
